# EUROPEAN PATENT APPLICATION

(11) **EP 4 804 433 A1**
(43) Date of publication of application: **09.09.2026**
(21) Application number: 23960952.2
(22) Date of filing: 20.12.2023
(51) Int. Cl.: H04L 1/00

(54) **METHOD AND APPARATUS FOR PROCESSING SIGNAL**

(30) Priority: 07.12.2023 KR 20230176985
(71) Applicant: Samsung Electronics Co., Ltd., Suwon-si, Gyeonggi-do 16677 (KR)
(72) Inventor: HAN, Donghwa, Suwon-si Gyeonggi-do 16677 (KR); LEE, Donghun, Suwon-si Gyeonggi-do 16677 (KR); JANG, Min, Suwon-si Gyeonggi-do 16677 (KR); MYUNG, Seho, Suwon-si Gyeonggi-do 16677 (KR)
(74) Representative: Nederlandsch Octrooibureau
(86) International application number: PCT/KR2023/021038
(87) International publication number: WO 2025/121523

(57) **Abstract**

The present invention relates to a method performed by a receiving node in a wireless communication system, comprising: an operation of receiving a signal vector including a plurality of information bits from a transmitting node; an operation of generating a log likelihood ratio (LLR) vector on the basis of the signal vector; an operation of generating a plurality of permutated LLR vectors by performing permutation on the LLR vector; and an operation of performing decoding on each of the plurality of permutated LLR vectors, wherein the decoding includes: an operation of generating a score on the basis of a first mathematical expression and at least one of a permutated codeword vector and a permutated data carrier vector, and selecting at least one or more vectors on the basis of the score; and an operation of obtaining a plurality of information bits on the basis of the selected at least one or more vectors.

## Description

### [Technical Field]

The disclosure relates to a wireless communication system (or mobile communication system). Specifically, the disclosure relates to a signal processing method and apparatus for performing automorphism ensemble decoding.

### [Background Art]

Considering the development of wireless communication from generation to generation, the technologies have been developed mainly for services targeting humans, such as voice calls, multimedia services, and data services. Following the commercialization of 5G (5th generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bit per second (bps) and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz (THz) band (for example, 95 gigahertz (GHz) to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, Radio Frequency (RF) elements, antennas, novel waveforms having a better coverage than Orthogonal Frequency Division Multiplexing (OFDM), beamforming and massive Multiple-input Multiple-Output (MIMO), Full Dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, Orbital Angular Momentum (OAM), and Reconfigurable Intelligent Surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, High-Altitude Platform Stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of Artificial Intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable superhigh-performance communication and computing resources (such as Mobile Edge Computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive eXtended Reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

### [Disclosure of Invention]

### [Technical Problem]

The receiving node may apply multiple permutation schemes to a signal vector received from the transmitting node, apply inverse permutation to vectors calculated by decoding respective vectors to which multiple permutation schemes are applied, and select one of inverse-permuted vectors based on the Euclidean distance value between the invers- permuted vectors and the signal vector. However, the signal vector is configured by real values in which noise is reflected, and there is thus a problem in that it is inappropriate to calculate the Euclidean distance value between the signal vector and the inverse-permutated vector.

In addition, if a legacy receiving node decodes a permutated signal vector, the decoder outputs a permutated carrier vector, and the permutated carrier vector cannot be directly inverse-permutated. Therefore, the permutated carrier should be encoded to output a permutated codeword vector, which should thereafter be inverse-permutated. Therefore, an encoding process must be performed for each vector to which multiple permutation schemes are applied, thereby posing a problem of increased complexity.

An aspect of the disclosure may be to provide a method and an apparatus for signal processing, which reduce complexity and improve accuracy in connection with processing received signals.

### [Solution to Problem]

In accordance with an embodiment of the disclosure, a method performed by a receiving node in a wireless communication system includes: receiving a signal vector including multiple information bits from a transmitting node; generating a log likelihood ratio (LLR) vector, based on the signal vector; performing permutation with regard to the LLR vector to generate multiple permutated LLR vectors; performing decoding with respect to each of the multiple permutated LLR vectors such that the decoding generates a score based on a first equation and at least one of a permutated codeword vector and a permutated data carrier vector; selecting at least one vector, based on the score; and acquiring the multiple information bits, based on the selected at least one vector.

Preferably, in the generating of multiple permuted LLR vectors, multiple permutated LLR vectors are generated based on multiple different permutation schemes, and each of the multiple permuted LLR vectors is one of all vectors that may be derived by considering the information bit index and the frozen bit index in the LLR vector.

Preferably, the multiple permutated LLR vectors are expressed by a linear combination of the LLR vector and a permutation matrix corresponding to one of the multiple permutation methods.

Preferably, the first equation may be based on values obtained by multiplying a vector resulting from modulating permutated codeword vector (*x̃*) by the permutated LLR vector between identical indices.

In addition, the decoding may generate a decision LLR vector, based on the permutated LLR vector, and the first equation may be based on a value corresponding to a frozen bit index of the decision LLR vector.

In addition, the decoding may generate a decision LLR vector, based on the permutated LLR vector, and the first equation may be based on a value corresponding to an information bit index of the decision LLR vector.

Preferably, the decoding may include successive cancellation-list (SCL) decoding, and the successive cancellation-list decoding may perform a first validity test with regard to candidate vectors corresponding to a preconfigured list value.

In addition, preferably, the decoding may be systematic decoding, and the signal processing method may further include: performing inverse permutation with regard to the permutated codeword vector to generate an inverse-permutated codeword vector; and performing a second validity test with respect to the inverse-permutated codeword vector. In the selecting of at least one vector, one of vectors which have passed the second validity test is selected.

### [Advantageous Effects of Invention]

According to an embodiment of the disclosure, the receiving node may reduce or minimize the latency and block error rate (BLER) which may occur in decoding processes.

In addition, various other effects that can be understood directly or indirectly from the disclosure may also be provided.

### [Brief Description of Drawings]

FIG. 1 illustrates a wireless communication system according to an embodiment of the disclosure.
FIG. 2 illustrates a structure of a UE according to an embodiment.
FIG. 3 illustrates a structure of a base station according to an embodiment.
FIG. 4 illustrates a signal processing method according to an embodiment.
FIG. 5 illustrates a signal processing method based on second decoding and an LLR vector according to an embodiment.
FIG. 6 illustrates a signal processing method to which a validity test is applied according to an embodiment.
FIG. 7 illustrates a signal processing method to which a validity test is applied according to an embodiment.
FIG. 8 illustrates a signal processing method to which successive cancellation list (SCL) decoding is applied according to an embodiment.
FIG. 9A illustrates detailed operations of the signal processing process of FIG. 8.
FIG. 9B illustrates detailed operations of the signal processing process of FIG. 9A.
FIG. 10A and FIG. 10B illustrate non-systematic encoding and systematic encoding, respectively.
FIG. 10C illustrates a signal processing method to which systematic encoding is applied according to an embodiment.
FIG. 11 illustrates a signal processing method to which systematic decoding is applied according to an embodiment.
FIG. 12 illustrates a signal processing method to which systematic decoding is applied according to an embodiment.
FIG. 13 illustrates the characteristics of a permutation matrix according to an embodiment.
FIG. 14 illustrates the features of a block-lower triangular matrix according to an embodiment.
FIG. 15 illustrates the features of an encoding matrix according to an embodiment.
FIG. 16 illustrates an upper triangular matrix according to an embodiment.
FIG. 17 illustrates a signal processing method according to an embodiment.
FIG. 18 illustrates a signal processing method according to an embodiment.
FIG. 19 illustrates a signal processing method according to an embodiment.
FIG. 20 illustrates a signal processing method according to an embodiment.

With regard to the description of the drawings, the same or like reference signs may be used to designate the same or like elements.

### [Mode for the Invention]

Hereinafter, various embodiments of the disclosure will be described with reference to the accompanying drawings. However, this is not intended to limit the disclosure to specific embodiments, and it is to be understood that various modifications, equivalents, and/or alternatives of the embodiments of the disclosure are included within the scope of the disclosure.

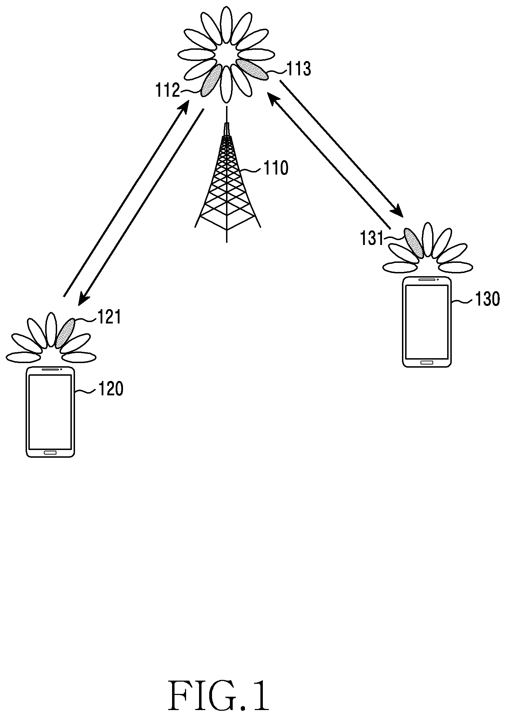

FIG. 1 illustrates a wireless communication system according to an embodiment of the disclosure.

FIG. 1 illustrates a base station 110, a first UE 120, and/or a second UE 130 as some of nodes using a radio channel in the wireless communication system. FIG. 1 illustrates only one base station, but this is merely an example. Other base stations identical or similar to the base station 110 may be further included in the wireless communication system of FIG. 1.

The base station 110 is a network infrastructure which provides radio access to the UEs 120 and 130. The base station 110 has coverage which is defined as a certain geographical area, based on a distance over which a signal can be transmitted. In addition to the term "base station", the base station 110 may be referred to as an "access point (AP)", an "eNodeB (eNB)", a "gNodeB (gNB)", a "5th generation node (5G node)", a "wireless point", a "transmission/reception point (TRP)", or other terms having technical meanings equivalent thereto.

Each of the first UE 120 and the second UE 130 is a device used by a user, and may perform communication with the base station 110 via a radio channel. At least one of the UE 120 and the UE 130 may be operated without the user's involvement. For example, at least one of the first UE 120 and the second UE 130 may be a device which performs machine type communication (MTC), and may not be carried by the user. In addition to the term "terminal", each of the first UE 120 and the second UE 130 may be referred to as a "user equipment (UE)", a "mobile station", a "subscriber station", a "customer-premises equipment (CPE)", a "remote terminal", a "wireless terminal", an "electronic device", a "user device", or other terms having technical meanings equivalent thereto.

The base station 110, the first UE 120, and the second UE 130 may transmit and/or receive wireless signals in millimeter wave (mmWave) bands (e.g., 28GHz, 30GHz, 38GHz, and 60GHz). In this case, in order to improve channel gain, the base station 110, the first UE 120, and the second UE 130 may perform beamforming.

The beamforming may include transmission beamforming and/or reception beamforming. That is, the base station 110, the first UE 120, and the second UE 130 may assign directivity to a transmission signal or a reception signal. To assign directivity to a transmission signal, the base station 110 and/or the UEs 120 and 130 may select serving beams 112, 113, 121, and 131 through a beam search or beam management procedure. After the serving beams 112, 113, 121, and 131 are selected, subsequent communication may be performed through resources having a quasi co-located (QCL) relationship with resources used to transmit the serving beams 112, 113, 121, and 131.

Each of the base station 110, the first UE 120, and the second UE 130 of the disclosure may be a transmitting apparatus, a transmitting node, a receiving node, a receiving apparatus, and/or a receiving node. For example, the base station 110 may transmit a radio frequency (RF) signal to the first UE 120. The base station 110 may receive an RF signal from the first UE 120. As another example, the first UE 120 may transmit an RF signal to the base station 110 or the second UE 130. The first UE 120 may receive an RF signal from the base station 110 or the second UE 130.

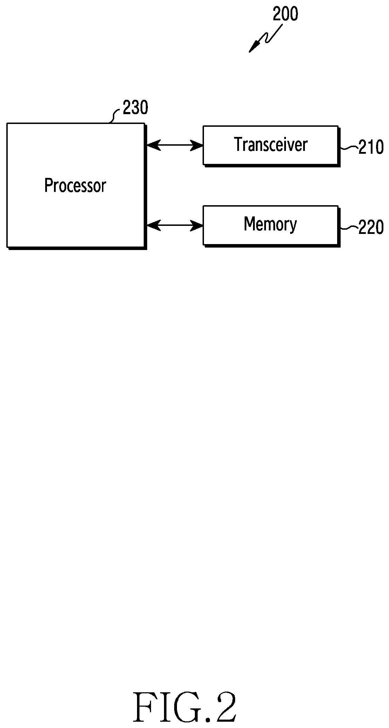

FIG. 2 illustrates a structure of a UE according to an embodiment.

Referring to FIG. 2, the UE 200 according to an embodiment may include a transceiver 210, a memory 220, and/or a processor 230. Although the UE 200 is described herein as including the transceiver 210, the memory 220, and/or the processor 230, this is merely an example. For example, the UE 200 may further include components other than the transceiver 210, the memory 220, and the processor 230.

According to an embodiment, each of the transceiver 210, the memory 220, and the processor 230 may be implemented as a separate chip. However, this is merely an example, and the transceiver 210, the memory 220, and/or the processor 230 may be implemented as a single chip.

According to an embodiment, the transceiver 210 may include at least one transmitter and/or at least one receiver. For example, the transceiver 210 may include an RF transmitter for amplifying and up-converting the frequency of a transmitted signal. The transceiver 210 may include an RF receiver for downconverting and low-noise amplifying the frequency of a received signal.

The components of the transceiver 210 set forth herein are merely an example, and the components of the transceiver 210 are not limited to the RF transmitter and the RF receiver. For example, the transceiver 210 may further include a coupler for ensuring isolation between the RF transmitter and the RF receiver.

According to an embodiment, the transceiver 210 may transmit or receive a signal to or from the processor 230. For example, the transceiver 210 may transmit or deliver an RF signal, received via a radio channel, to the processor 230. The transceiver 210 may receive an RF signal from the processor 230 or the processor 230 may deliver an RF signal to the transceiver 210.

According to an embodiment, the transceiver 210 may be referred to as a "UE transmitter" or a "UE receiver".

According to an embodiment, the transceiver 210 may transmit a signal to a base station (e.g., the base station 110 in FIG. 1) or a network entity (e.g., user plane function (UPF) entity) or receive a signal from the base station or the network entity. In an embodiment, the transmitted or received signal may include a control signal or data.

According to an embodiment, the memory 220 may store programs and data necessary for the operations of the UE 200. For example, the memory 220 may be a non-transitory memory, and programs stored in the non-transitory memory may be organically coupled to hardware components (e.g., the processor 230 or the transceiver 210) of the UE 200. The memory 220 may store control information or data including a signal acquired by the UE 200. In an embodiment, the memory 220 may include a read-only memory (ROM), a random access memory (RAM), a hard disk, a CD-ROM, a DVD, or storage media.

According to an embodiment, the processor 230 may include one processor or multiple processors. For example, the processor 230 may include a communication processor. For example, the processor 230 may include a communication processor and/or an application processor.

According to an embodiment, the processor 230 may control a series of processes performed by the UE 200. For example, the transceiver 210 may receive a data signal including control information transmitted by the base station or the network entity. The processor 230 may process the received control signal and data signal.

The term "processor" as used herein may be replaced with various terms referring to components for executing or performing the operations of the UE 200. For example, the processor may be replaced with the term "controller" or "computing circuit".

The UE 200 of the disclosure may correspond to the first UE 120 and/or the second UE 130 in FIG. 1.

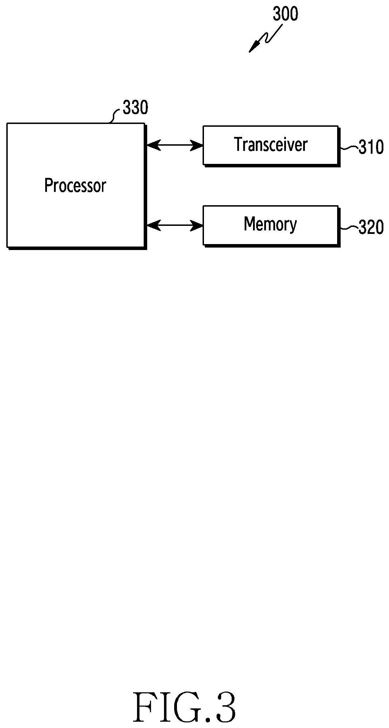

FIG. 3 illustrates a structure of a base station according to an embodiment.

Referring to FIG. 3, the base station 300 according to an embodiment may include a transceiver 310, a memory 320, and/or a processor 330. Although the base station 300 is described herein as including the transceiver 310, the memory 320, and/or the processor 330, this is merely an example. For example, the base station 300 may further include components other than the transceiver 310, the memory 320, and the processor 330.

According to an embodiment, each of the transceiver 310, the memory 320, and the processor 330 may be implemented as a separate chip. However, this is merely an example, and the transceiver 310, the memory 320, and/or the processor 330 may be implemented as a single chip.

According to an embodiment, the transceiver 310 may include at least one transmitter and/or at least one receiver. For example, the transceiver 310 may include an RF transmitter for amplifying and up-converting the frequency of a transmitted signal. The transceiver 310 may include an RF receiver for downconverting and low-noise amplifying the frequency of a received signal.

The components of the transceiver 310 set forth herein are merely an example, and the components of the transceiver 310 are not limited to the RF transmitter and the RF receiver. For example, the transceiver 310 may further include a coupler for ensuring isolation between the RF transmitter and the RF receiver.

According to an embodiment, the transceiver 310 may transmit or receive a signal to or from the processor 330. For example, the transceiver 310 may transmit or deliver an RF signal, received via a radio channel, to the processor 330. The transceiver 310 may receive an RF signal from the processor 330 or the processor 330 may deliver an RF signal to the transceiver 310.

According to an embodiment, the transceiver 310 may be referred to as a "base station transmitter" or a "base station receiver".

According to an embodiment, the transceiver 310 may transmit a signal to the UE 200 or receive a signal from the UE 200. In an embodiment, the transmitted or received signal may include a control signal or data.

According to an embodiment, the memory 320 may store programs and data necessary for the operations of the base station 300. For example, the memory 320 may be a non-transitory memory, and programs stored in the non-transitory memory may be organically coupled to hardware components (e.g., the processor 330 or the transceiver 310) of the base station 300. The memory 320 may store control information or data including a signal acquired by the base station 300. In an embodiment, the memory 320 may include a read-only memory (ROM), a random access memory (RAM), a hard disk, a CD-ROM, a DVD, or storage media.

According to an embodiment, the processor 330 may include one processor or multiple processors. For example, the processor 330 may include a communication processor. For example, the processor 330 may include a communication processor and/or an application processor.

According to an embodiment, the processor 330 may control a series of processes performed by the base station 300. For example, the transceiver 310 may receive a data signal including control information transmitted by the base station or the network entity. The processor 330 may process the received control signal and data signal.

The term "processor" as used herein may be replaced with various terms referring to components for executing or performing the operations of the base station 300. For example, the processor may be replaced with the term "controller" or "computing circuit".

The device described in FIG. 2 or FIG. 3 may correspond to a device of a transmitting node or receiving node. The UE or base station according to an embodiment of the disclosure may be a transmitting node on the transmitting side and may be a receiving node on the receiving side.

In the following, the transmitting node and the receiving node may each refer to the UEs or the base station described above in FIG. 1 to FIG. 3. In the case of the description of a downlink signal, the base station will be the transmitting node and the UE will be the receiving node, and in the case of the description of an uplink signal, the UE will be the transmitting node and the base station will be the receiving node.

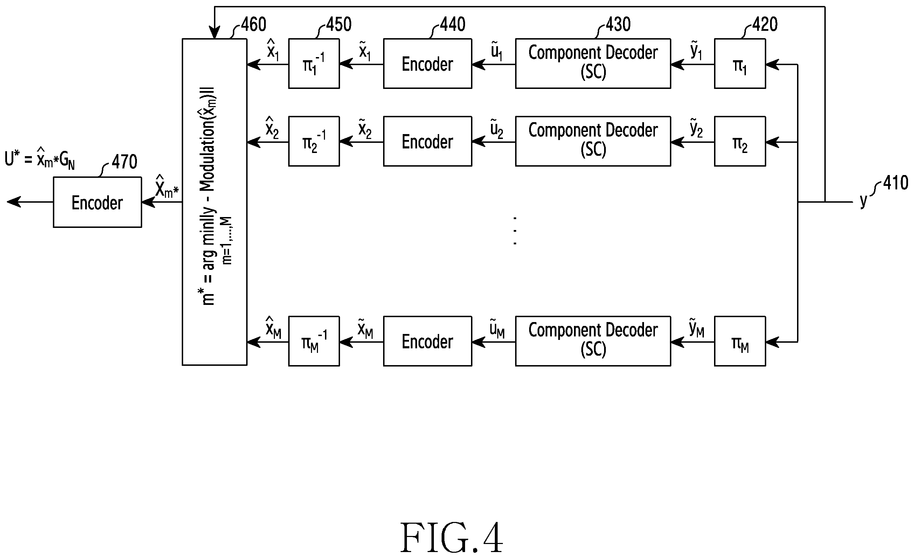

FIG. 4 is a diagram for describing a signal processing method according to an embodiment.

Referring to FIG. 4, a signal processing method of a receiving node will be described.

According to an embodiment, the receiving node may correspond to each UE (e.g., the UE 200 of FIG. 2) or base station (e.g., the base station 300 of FIG. 3). For example, the transmitting node may correspond to the base station 300, and the receiving node may correspond to the UE 200. The transmitting node may transmit an RF signal to the receiving node through a wireless communication channel, and the receiving node may receive an RF signal from the transmitting node through a wireless communication channel.

In addition, the transmitting node may correspond to the first UE (e.g., the first UE 120 of FIG. 1), and the receiving node may correspond to the second UE (e.g., the second UE 130 of FIG. 1). The transmitting node may perform sidelink communication by transmitting an RF signal to the receiving node.

According to an embodiment, an RF signal transmitted from the transmitting node to the receiving node may include encoded bits, and the encoded bits may be processed in the receiving node. Hereinafter, a process in which the receiving node processes (that is, decodes) bits encoded by an encoding scheme proposed in the disclosure will be described.

According to an embodiment, the transmitting node may perform subchannel allocation with regard to information vector *d* to generate a data carrier vector *u*, perform encoding with regard to the data carrier vector *u* to generate a codeword vector *x*, and transmit the codeword vector *x* to the receiving node. The receiving node may receive a signal having a difference caused by noise applied to the corresponding signal, and the received signal vector may be referred to as *y*.

The information vector *d* may include a designated number of bits. The information vector may be referred to as *d* = {*d*₀, *d*₁, ... , *d*_{*A-*1}}. The number of bits of the information vector may be *A*.

The data carrier vector *u* may include information bits in which information to be transmitted is included, and frozen bits in which information is not included. The data carrier vector (rate profiled vector) may be referred to as *u* = {*u*₀, *u*₁, ... , *u*_{*N-*1}}. *N* refers to the size of a mother polar code, which is a power of 2, and may be determined by a predetermined criterion among values larger than *A*. The number of bits of the data carrier vector may be *N*, and the number of inserted frozen bits may be *N-A*. The number of at least one inserted or concatenated frozen bit may be preconfigured. The data carrier vector *u* may be referred to as a rate profiled vector. In addition, the data carrier vector *u* may be referred to as a subchannel allocated vector.

By including frozen bits as described above, even if bits included in the signal transmitted from the transmitting node are partially lost due to a wireless communication channel, the loss of information bits may be minimized because the frozen bits are mainly lost.

The codeword vector *x* may be generated by the following Equation 1.$x = u * G$

In [Equation 1], *x* is a codeword vector, and *u* is a data carrier vector. *G* is a generator matrix of a polar code and may represent a polar encoding operation. *G* may also be referred to as a polar code generator matrix. The polar code generator matrix *G* may have characteristics such that G*G is an identity matrix.

A codeword (or a codeword vector) may be transmitted from a transmitting node to a receiving node through a wireless communication channel. The receiving node may receive the codeword *y* which has passed through the wireless communication channel from the transmitting node. The codeword *y* received by the receiving node through the wireless communication channel may differ from the codeword *x* transmitted by the transmitting node due to the influence of the channel environment (e.g., noise).

Referring to FIG. 4, operation 410 refers to an operation in which a receiving node according to an embodiment of the disclosure receives a signal vector *y*.

In operation 420, the receiving node performs permutation with regard to the received signal vector *y*. A permutation operation according to an embodiment may indicate conversion of the order of columns included in a vector. In addition, the permutation operation may be performed based on multiple permutation schemes. For example, the receiving node may perform a first permutation operation to *M*^{th} permutation operation with regard to the signal vector *y*. As a result, a first permutated signal vector ( ${{y}_{1}}^{˜}$) to an *M*^{th} permutated signal vector ( ${{y}_{M}}^{˜}$) may be generated. The multiple permutation schemes may have different permutation schemes.

In operation 430, the receiving node generates a permutation data carrier vector (*ũ*) by performing first decoding (e.g., successive cancellation decoding) based on the permutation signal vector. The permutated data carrier vector (*ũ*) may be a vector generated through a successive cancellation decoding operation with regard to the permutated signal vector ( ${{y}_{M}}^{˜}$).

Since the decoding operation is performed with regard to each of the multiple permutated signal vectors, multiple data carrier vectors ( ${{u}_{1}}^{˜} , {{u}_{2}}^{˜} , … , {{u}_{M}}^{˜}$) may be generated.

In operation 440, the receiving node performs encoding based on the permutated data carrier vector (*ũₘ*), and generates a permutated codeword vector *x̃*. Since the encoding operation is performed with regard to each of the multiple permutated data carrier vectors, multiple permutated codeword vectors may be generated. The encoding operation may be expressed as multiplying the permutation data carrier vector *ũ* by an encoding matrix *G*. That is, *ũ* ∗ *G* = (*x̃* ∗ *G*) ∗ *G*. A polar code encoding matrix *G* multiplied by the same matrix G generates a unit matrix *I*, and a permutated codeword vector *x̃* is consequently generated.

In operation 450, the receiving node performs inverse permutation based on the permutated codeword vector *x̃* and generates an inverse-permutated codeword vector *x̂*. Since the inverse permutation operation is performed with regard to each of the multiple permutated codeword vectors, multiple inverse-permutated codeword vectors may be generated.

In operation 460, the receiving node selects one inverse-permutated codeword vector from the multiple generated inverse-permutated codeword vectors. The receiving node may calculate the distance between the multiple inverse-permutated codeword vectors and the signal vector *y*, and select an inverse-permutated codeword vector that is closest to the signal vector *y*, based on the calculation result. A known scheme (e.g., Euclidean distance) may be applied to the calculate the distance. The selected inverse-permutated codeword vector may be represented by **x̂**_{*m*∗}.

In operation 470, the receiving node performs an encoding operation with regard to the selected inverse-permutated codeword vector **x̂**_{*m*∗} and generates an inverse-permutated data carrier vector **û**_{*m*∗} . Since the receiving node cannot directly calculate information bits from the codeword vector, the receiving node may perform an encoding operation again to convert the codeword vector into a data carrier vector, and may acquire information bits from the data carrier vector. The acquired information bits may be referred to as estimated information bits.

Operations performed by the transmitting node may be understood as being substantially performed by at least one processor or controller included in the transmitting node. In addition, operations performed by the receiving node may be understood as being substantially performed by at least one processor or controller included in the receiving node.

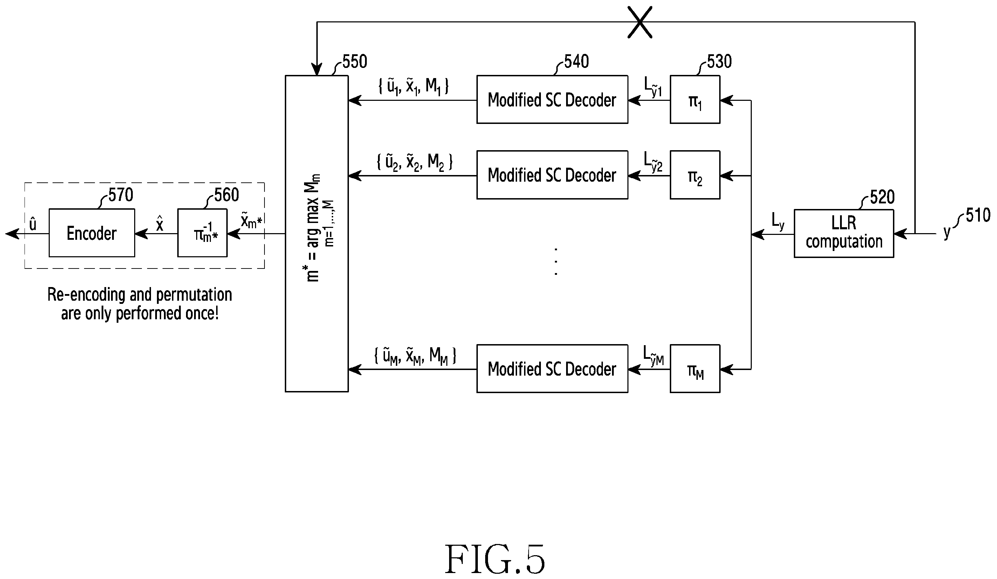

FIG. 5 is a diagram for describing a signal processing method based on second decoding and a log likelihood ratio (LLR) vector according to an embodiment.

According to an embodiment, the receiving node may correspond to each UE (e.g., the UE 200 of FIG. 2) or base station (e.g., the base station 300 of FIG. 3). For example, the transmitting node may correspond to the base station 300, and the receiving node may correspond to the UE 200. The transmitting node may transmit an RF signal to the receiving node through a wireless communication channel, and the receiving node may receive an RF signal from the transmitting node through a wireless communication channel.

In addition, the transmitting node may correspond to the first UE (e.g., the first UE 120 of FIG. 1), and the receiving node may correspond to the second UE (e.g., the second UE 130 of FIG. 1). The transmitting node may perform sidelink communication by transmitting an RF signal to the receiving node.

According to an embodiment, an RF signal transmitted from the transmitting node to the receiving node may include encoded bits, and the encoded bits may be processed in the receiving node. Hereinafter, a process in which the receiving node processes bits encoded by a polar coding scheme will be described.

According to an embodiment, the transmitting node may perform subchannel allocation with regard to information vector *d* to generate a data carrier vector *u*, perform encoding with regard to the data carrier vector *u* to generate a codeword vector *x*, and transmit the codeword vector *x* to the receiving node. The receiving node may receive a signal having a difference caused by noise applied to the corresponding signal, and the received signal vector may be referred to as *y*.

The information vector *d* may include a designated number of bits. The information vector may be referred to as *d* = {*d*₀, *d*₁, ... , *d*_{*A-*1}}. The number of bits of the information vector may be *A*.

The data carrier vector *u* may include information bits in which information to be transmitted is included, and frozen bits in which information is not included. The data carrier vector may be referred to as *u* = {*u*₀, *u*₁, ... , *u*_{*N-*1}}. The number of bits of the data carrier vector may be *N*, and the number of inserted frozen bits may be *N-A*. The number of at least one inserted or concatenated frozen bit may be preconfigured. The data carrier vector *u* may be referred to as a rate profiled vector.

A codeword (or a codeword vector) may be transmitted from a transmitting node to a receiving node through a wireless communication channel. The receiving node may receive the codeword *y* which has passed through the wireless communication channel from the transmitting node. The codeword *y* received by the receiving node through the wireless communication channel may differ from the codeword *x* transmitted by the transmitting node due to the influence of the channel environment (e.g., noise).

Referring to FIG. 5, operation 510 refers to an operation in which a receiving node according to an embodiment of the disclosure receives a signal vector *y*.

In operation 520, the receiving node calculates an LLR value with regard to the received signal vector *y*. The receiving node may calculate an LLR vector *L_{y}* by calculating the LLR value with regard to each element of the signal vector *y*.

In operation 530, permutation is performed with regard to the LLR vector generated in operation 520. A permutation operation according to an embodiment may indicate conversion of the order of values included in a vector. In addition, the permutation operation may be performed based on multiple permutation schemes. For example, the receiving node may perform a first permutation operation to *M*^{th} permutation operation with regard to the LLR vector *L_{y}*. As a result, a first permutated signal vector ( ${L}_{{{y}_{1}}^{˜}}$) to an *M*^{th} permutated signal vector ( ${L}_{{{y}_{M}}^{˜}}$) may be generated. The multiple permutation schemes may have different permutation schemes.

In operation 540, the receiving node performs second decoding (e.g., successive cancellation decoding) based on the permutated LLR vector, and outputs a score generated based on the permutated data carrier vector (*ũ*), the permutated codeword vector (*x̃*), and equations. Since the decoding operation is performed with regard to each of the multiple permutated LLR vectors, a data carrier vector, a codeword vector, and a score corresponding to each of the multiple permutated LLR vectors may be generated. In an embodiment, the decoder may be improved to receive the permutated LLR vector as input and to output a score generated based on the permutated data carrier vector (*ũ*), the permutated codeword vector (*x̃*), and equations.

In an embodiment, the score output by operation 540 may be generated based on [Equation 2] to [Equation 4] below. ${M}_{CM}^{\left(m\right)} : = \left〈BPSK\left({{x}^{˜}}_{m}\right),{L}_{{{y}^{˜}}_{m}}\right〉 = {\sum }_{i ∈ {ℤ}_{N}} {L}_{{{y}^{˜}}_{m , i}} ⋅ BPSK \left({{x}^{˜}}_{m , i}\right)$

[Equation 2] may be referred to as a correlation metric.

The score ( ${M}_{CM}^{\left(m\right)}$) may be calculated by multiplying the permutated codeword vector (*x̃*) by values of a BPSK-modulated vector and values included in an LLR vector (channel LLR vector) between identical indices, and summating the multiplied values. The modulation scheme is not limited to BPSK, and other known modulation schemes may be applied. ${M}_{PM}^{\left(m\right)} : = {\sum }_{i ∈ F} {L}_{n}^{\left(i\right)} \left[m\right] {1}_{\left\{sign\left({L}_{n}^{\left(i\right)}\left[m\right]\right)\neq 1\right\}}$

[Equation 3] may be referred to as an SCL-like path metric.

Referring to [Equation 3], in case that the sign value the value corresponding to the frozen bit index (*i* ∈ *F)* of the decision LLR vector ( ${L}_{n}^{\left(i\right)} \left[m\right]$) is not 1, the score ( ${M}_{PM}^{\left(m\right)}$) may be calculated by summating the value of the decision LLR vector corresponding to the frozen bit index. The decision LLR vector may be generated in the decoding process of operation 540, and the frozen bit index value may be a predetermined value. ${M}_{LM}^{\left(m\right)} : = {\sum }_{i ∈ I} \left|{L}_{n}^{\left(i\right)}\left[m\right]\right|$

[Equation 4] may be referred to as a decision LLR metric.

Referring to [Equation 4], the score ( ${M}_{LM}^{\left(m\right)}$) may be calculated by summating the absolute values of values corresponding to the information bit index (*i* ∈ *I*) of the decision LLR vector ( ${L}_{n}^{\left(i\right)} \left[m\right]$). The decision LLR vector may be generated in the decoding process of operation 540, and the information bit index value may be a predetermined value.

In an embodiment, operation 540 may calculate scores, based on [Equation 2] to [Equation 4]. However, the equations for calculating scores are not limited to [Equation 2] to [Equation 4], and may include other equations based on the channel LLR vector or decision LLR vector, the frozen bit index or information bit index.

In operation 550, the receiving node selects one of multiple permutated codeword vectors (*x̃*), based on scores corresponding to respective permutated LLR vectors. The receiving node may select the permutated codeword vector ( ${{x}_{m *}}^{˜}$) corresponding to the highest score.

In operation 560, the receiving node performs inverse permutation based on the selected permutated codeword vector ${{x}_{m *}}^{˜}$ and generates an inverse-permutated codeword vector *x̂*. Since the inverse permutation operation is performed with regard to the single selected vector, the calculation process may be simplified as compared to the embodiment described with reference to FIG. 4 (where the inverse permutation operation is performed *M* times).

In operation 570, the receiving node performs an encoding operation with regard to the selected inverse-permutated codeword vector *x̂* and generates an inverse-permutated data carrier vector *û*. The receiving node may be unable to directly calculate information bits from the codeword vector, and may therefore perform an encoding operation again to convert the codeword vector to a data carrier vector, and then acquire information bits from the data carrier vector. The acquired information bits may be referred to as estimated information bits. The encoding operation may be expressed as multiplying the inverse-permutated codeword vector *x̂* by an encoding matrix *G*. That is, *û* = *x̂* ∗ *G*.

The signal processing method described with reference to FIG. 5 does not select a vector based on the distance between the signal vector *y* and the codeword vector *x*. Instead, a score is generated in the decoding operation, and a vector is selected based on the score.

Operation performed by the receiving node may be understood as being substantially performed by at least one processor or controller included in the receiving node.

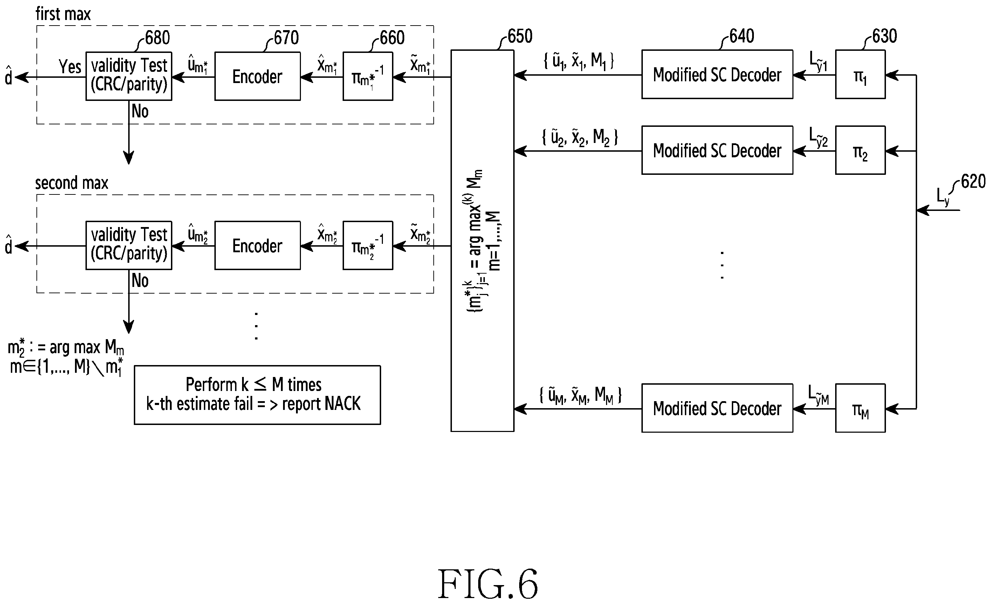

FIG. 6 is a diagram for describing a signal processing method to which a validity test is applied according to an embodiment.

The signal processing method of FIG. 6 may be understood as an embodiment in which the receiving node performs a validity test operation in the signal processing method of FIG. 5.

In operation 620, the receiving node calculates an LLR value with regard to a received signal vector *y*. The receiving node may calculate an LLR value per each element of the signal vector *y* to generate an LLR vector *L_{y}*. Operation 620 may correspond to operation 520 of FIG. 5.

In operation 630, permutation is performed with regard to the LLR vector generated in the previous operation. A permutation operation may indicate conversion of the order of values included in a vector. In addition, the permutation operation may be performed based on multiple permutation schemes. For example, the receiving node may perform a first permutation operation to *M*^{th} permutation operation with regard to the LLR vector *L_{y}*. As a result, a first permutated LLR vector ( ${L}_{{{y}_{1}}^{˜}}$) to an *M*^{th} permutated LLR vector ( ${L}_{{{y}_{M}}^{˜}}$) may be generated. The multiple permutation schemes may have different permutation schemes. Operation 630 may correspond to operation 530 of FIG. 5.

In operation 640, the receiving node performs second decoding (e.g., successive cancellation decoding) based on the permutated signal vector, and outputs a score *M* generated based on the permutated data carrier vector (*ũ*), the permutated codeword vector (*x̃*), and equations. Since the decoding operation is performed with regard to each of the multiple permutated LLR vectors, multiple data carrier vectors, codeword vectors, and scores may be generated. In an embodiment, the decoder may be improved to receive the permutated LLR vector as input and to output a score generated based on the permutated data carrier vector (*ũ*), the permutated codeword vector (*x̃*), and equations. Previous descriptions made with reference to FIG. 5 may be referred to in connection with equations. Operation 640 may correspond to operation 540 of FIG. 5.

In operation 650, the receiving node selects at least one vector from among multiple permutated codeword vectors (*x̃*) based on the calculated score. The receiving node may select as many permutated codeword vectors ( ${{x}_{m *}}^{˜}$) as *k* in descending order of scores. In operation 660, the receiving node performs inverse permutation with regard to the *k* selected permutated codeword vectors ${{x}_{m *}}^{˜}$ and generates an inverse-permutated codeword vector *x̂*. Since the inverse permutation operation is performed with respect to *k* vectors, *k* inverse-permutated codeword vectors are calculated.

In operation 670, the receiving node performs an encoding operation with regard to *k* inverse-permutated codeword vectors and generates inverse-permutated data carrier vectors. The receiving node is unable to directly calculate information bits from the codeword vector, and therefore performs an encoding operation again to convert the codeword vector into a data carrier vector.

In operation 680, the receiving node performs a validity test with respect to *k* inverse-permutated data carrier vectors. The validity test may include a cyclic redundancy check (CRC) or a parity check. The validity test may be performed sequentially with respect to *k* vectors, and in case that not all of the *k* vectors pass the validity test, the receiving node may report a NACK message. The receiving node may acquire information bits (*d̂*) by using vectors that have passed the validity test.

In an embodiment, operations 660 to 680 may be sequentially performed, starting from the highest scoring vector among the *k* selected permutated codeword vectors ${{x}_{m *}}^{˜}$. For example, in case that the receiving node performed operations 660 to 680 with respect to the highest scoring permutated codeword vector, but the result has failed to pass the validity test, the receiving node may perform operations 660 to 680 with respect to the next highest scoring permutated codeword vector. In this manner, operations 660 to 680 may be performed sequentially with regard to the *k* vectors.

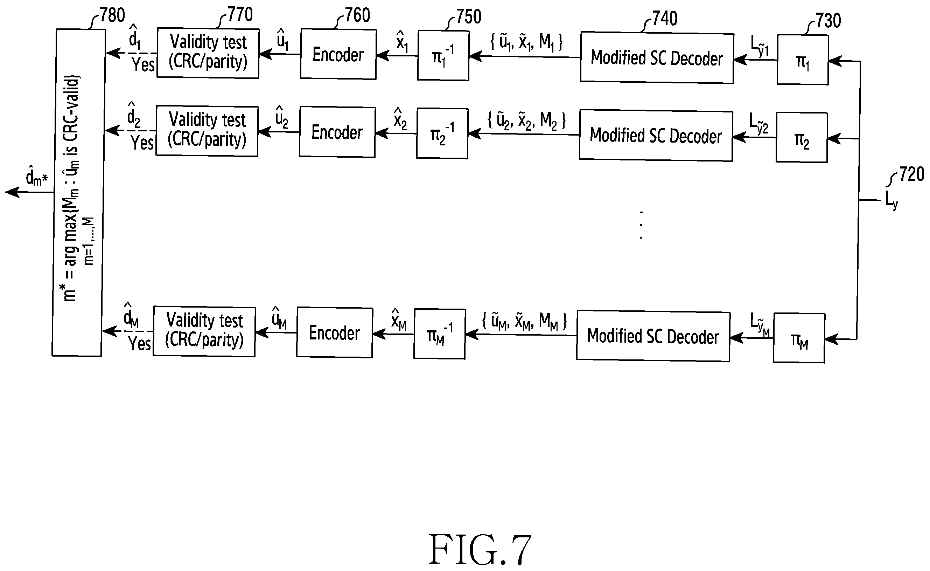

FIG. 7 is a diagram for describing a signal processing method to which a validity test is applied according to an embodiment.

The signal processing method of FIG. 7 may be understood as an embodiment in which the receiving node performs a validity test operation in a changed order from the signal processing method of FIG. 6.

In operation720, the receiving node calculates an LLR value with regard to a received signal vector *y*. The receiving node may calculate an LLR value per each element of the signal vector *y* to generate an LLR vector *L_{y}*. Operation 720 may correspond to operation 620 of FIG. 6.

In operation 730, permutation is performed with regard to the LLR vector generated in the previous operation. A permutation operation may indicate conversion of the order of values included in a vector. In addition, the permutation operation may be performed based on multiple permutation schemes. For example, the receiving node may perform a first permutation operation to *M*^{th} permutation operation with regard to the LLR vector *L_{y}*. As a result, a first permutated LLR vector ( ${L}_{{{y}_{1}}^{˜}}$) to an *M*^{th} permutated LLR vector ( ${L}_{{{y}_{M}}^{˜}}$) may be generated. The multiple permutation schemes may have different permutation schemes. Operation 730 may correspond to operation 630 of FIG. 6.

In operation 740, the receiving node performs second decoding (e.g., successive cancellation decoding) based on the permutated LLR vector, and outputs a score *M* generated based on the permutated data carrier vector (*ũ*), the permutated codeword vector (*x̃*), and equations. Since the decoding operation is performed with regard to each of the multiple permutated LLR vectors, multiple data carrier vectors, codeword vectors, and scores may be generated. In an embodiment, the decoder may be improved to receive the permutated LLR vector as input and to output a score generated based on the permutated data carrier vector (*ũ*), the permutated codeword vector (*x̃*), and equations. Previous descriptions made with reference to FIG. 5 may be referred to in connection with equations. Operation 740 may correspond to operation 640 of FIG. 6.

In operation 750, the receiving node performs inverse permutation with regard to the permutated codeword vector (*x̃*) and generates an inverse-permutated codeword vector *x̂*. Since operation 750 is performed with regard to multiple permutated codeword vectors (*x̃*), multiple inverse-permutated codeword vector (*x̃*) may be generated.

In operation 760, the receiving node encodes inverse-permutated codeword vectors (*x̃*) and generates inverse-permutated data carrier vectors (*û*). Since the encoding operation is performed with regard to each of multiple inverse-permutated codeword vectors (*x̃*), multiple inverse-permutated data carrier vectors (*û*) may be generated.

In operation 770, a validity test is performed with regard to each of the multiple inverse-permutated data carrier vectors (*û*) generated in operation 760. The validity test may include a cyclic redundancy check (CRC) or a parity check. In case that not all vectors pass the validity test, the receiving node may report a NACK message. Operation 770 may correspond to operation 680 of FIG. 6.

In operation 780, one vector is selected from the vectors that have passed the validity test in operation 770. In operation 780, a vector may be selected based on a score generated in operation 740. For example, the receiving node may select the highest scoring vector to acquire information bits.

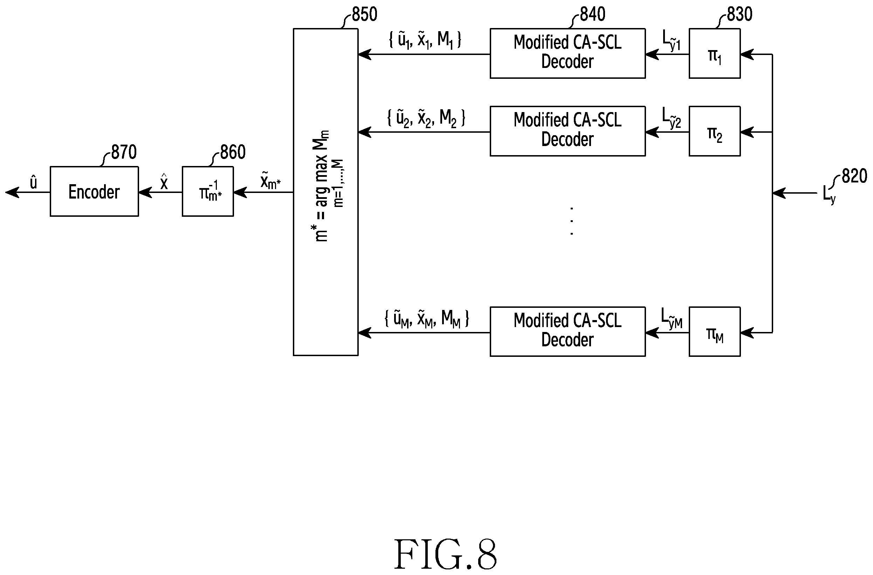

FIG. 8 is a diagram for describing a signal processing method to which CRC-aided successive cancellation list (CA-SCL) decoding is applied according to an embodiment.

The signal processing method of FIG. 8 may be understood as an embodiment in which the receiving node performs a CA-SCL decoding operation in the signal processing method of FIG. 5.

In operation 820, the receiving node calculates an LLR value with regard to a received signal vector *y*. The receiving node may calculate an LLR vector *L_{y}* by calculating the LLR value with regard to each element of the signal vector *y*. Operation 820 may correspond to operation 520 of FIG. 5.

In operation 830, permutation is performed with regard to the LLR vector generated in operation 820. A permutation operation according to an embodiment may indicate conversion of the order of values included in a vector. In addition, the permutation operation may be performed based on multiple permutation schemes. For example, the receiving node may perform a first permutation operation to *M*^{th} permutation operation with regard to the LLR vector *L_{y}*. As a result, a first permutated signal vector ( ${L}_{{{y}_{1}}^{˜}}$) to an *M*^{th} permutated signal vector ( ${L}_{{{y}_{M}}^{˜}}$) may be generated. The multiple permutation schemes may have different permutation schemes.

In operation 840, the receiving node performs CRC aided (CA)-SCL decoding based on the permutated LLR vector, and outputs a score generated based on the permutated data carrier vector (*ũ*), the permutated codeword vector (*x̃*), and equations. Since the CA-SCL decoding operation is performed with regard to each of the multiple permutated LLR vectors, multiple data carrier vectors, codeword vectors, and scores may be generated. In an embodiment, the decoder may be improved to receive the permutated LLR vectors as inputs and to output scores generated based on the permutated data carrier vectors (*ũ*), permutated codeword vectors (*x̃*), and equations.

In operation 850, the receiving node selects one of multiple permutated codeword vectors (*x̃*), based on scores corresponding to respective permutated LLR vectors. The receiving node may select the permutated codeword vector ( ${{x}_{m *}}^{˜}$) corresponding to the highest score.

In operation 860, the receiving node performs inverse permutation based on the selected permutated codeword vector ${{x}_{m *}}^{˜}$ and generates an inverse-permutated codeword vector *x̂*. Since the inverse permutation operation is performed with regard to the single selected vector, the calculation process may be simplified as compared to the embodiment described with reference to FIG. 4.

In operation 870, the receiving node performs an encoding operation with regard to the selected inverse-permutated codeword vector *x̂* and generates an inverse-permutated data carrier vector *û*. The receiving node may be unable to directly calculate information bits from the codeword vector, and may therefore perform an encoding operation again to convert the codeword vector to a data carrier vector, and then acquire information bits from the data carrier vector. The acquired information bits may be referred to as estimated information bits. The encoding operation may be expressed as multiplying the inverse-permutated codeword vector *x̂* by an encoding matrix *G*. That is, *û* = *x̂* ∗ *G*.

Operation performed by the receiving node may be understood as being substantially performed by at least one processor or controller included in the receiving node.

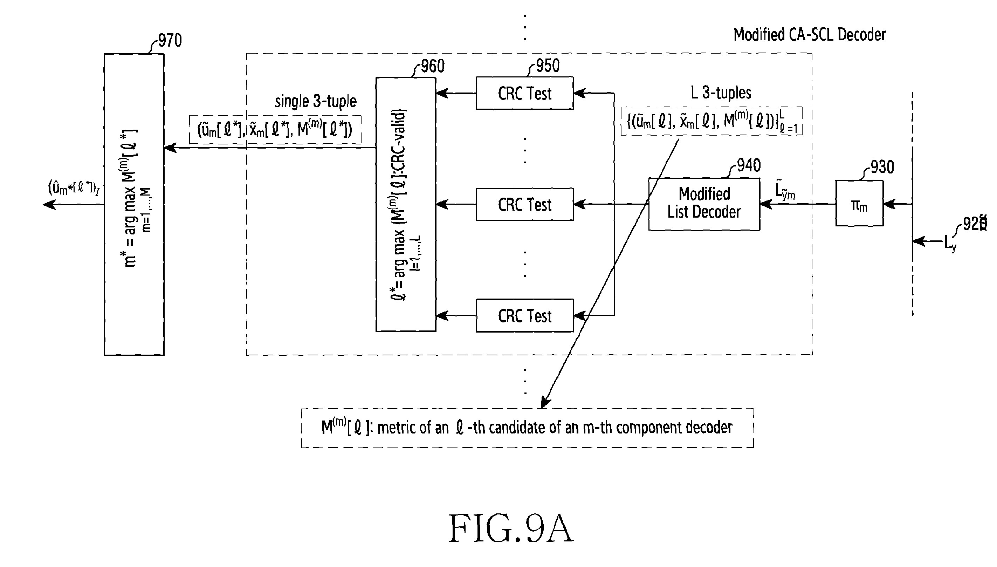

FIG. 9A is a diagram for describing detailed operations of the signal processing process of FIG. 8.

FIG. 9A illustrates in detail operation 840 of FIG. 8. Operation 940 to operation 960 in FIG. 9A may correspond to operation 840 in FIG. 8.

Referring to FIG. 9A, operation 920 corresponds to operation 820 in FIG. 8, and operation 930 corresponds to operation 830 in FIG. 8.

In operation 940, the receiving node performs third decoding based on a permutated signal vector and outputs a score generated based on a permutated data carrier vector (*ũ*), a permutated codeword vector (*x̃*), and equations. Since the third decoding is performed with regard to each of multiple permutated LLR vectors, multiple data carrier vectors, codeword vectors, and scores may be calculated. The scores may be calculated based on Equation 2 to Equation 4 described with reference to FIG. 5.

In an embodiment, the third decoding operation may be performed by a list decoder. The list decoder may select candidates during the decoding process, based on a preconfigured list value. For example, in case that the list value is 8, the list decoder may select 8 candidates during the decoding process.

In operation 950, a validity test (e.g., CRC) is performed with regard to candidates. For example, in case of 8 candidates, the receiving node may perform a validity test with regard to the 8 candidates.

In operation 960, the receiving node selects one from the candidates that have passed the validity test. The selection may be performed based on scores. For example, the receiving node may select a candidate corresponding to the highest score. The selected candidate may include a score generated based on a permutated data carrier vector (*ũ*), a permutated codeword vector (*x̃*), and equations.

Meanwhile, the receiving node may perform operations 940 to 960 with regard to a single permutated LLR vector. Therefore, when the receiving node performs operations 940 to 960 with regard to each of multiple LLR vectors permutated by *m* permutation methods, *m* vectors may be derived.

In operation 970, the receiving node selects one of the *m* candidates selected in operation 960. The selection by the receiving node may be performed based on the scores corresponding to respective candidates.

The above-described operation 940 to operation 960 may be referred to as CRC-aided successive cancellation list (CA-SCL) decoding operations. The CA-SCL decoding operations generate a candidate list during the decoding process and select one of the candidates based on the CRC. Therefore, an error correction function may be performed in the decoding process.

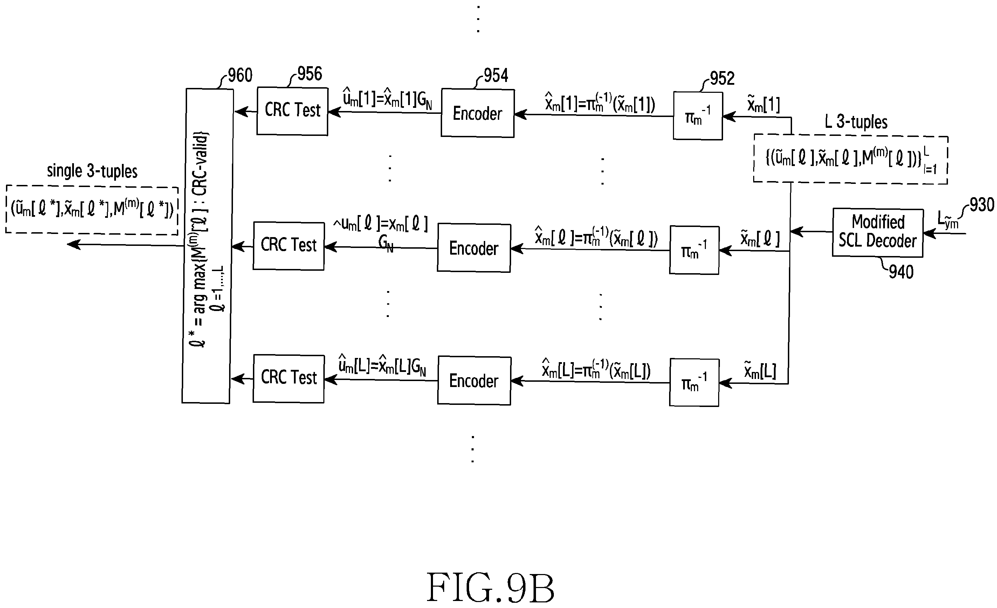

FIG. 9B is a diagram for describing detailed operations of the signal processing process of FIG. 9A.

FIG. 9B illustrates in detail operation 950 of FIG. 9A. Operation 952 to operation 956 in FIG. 9B may correspond to operation 950 in FIG. 9A.

Referring to FIG. 9B, operation 940 corresponds to operation 940 of FIG. 9A, and operation 960 of FIG. 9B corresponds to operation 960 of FIG. 9A.

In operation 930, the receiving node performs permutation with regard to the LLR vector 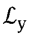 calculated from the element-specific LLR value of the received signal vector *y*. That is, operation 930 may be an operation of generating a permutated LLR vector.

In operation 952, inverse permutation is performed with regard to multiple codeword vector (*x̃*) candidates generated in operation 940 and generates an inverse-permutated codeword vector (*x̂*). Since operation 952 is performed with regard to multiple permutated codeword vectors (*x̂*), multiple inverse-permutated codeword vectors (*x̂*) may be generated.

In operation 954, the receiving node encodes inverse-permutated codeword vectors (*x̂*) and generate inverse-permutated data carrier vectors (*û*). Since the encoding operation is performed with regard to each of the multiple inverse-permutated codeword vectors (*x̂*), multiple inverse-permutated data carrier vectors (*û*) may be generated.

In operation 956, a validity test (e.g., CRC) is performed with regard to each of the multiple inverse-permutated data carrier vectors (*û*) generated in operation 954. For example, in case of 8 candidates, the receiving node may perform a validity test with regard to the 8 candidates.

Operation 940 to operation 960 in FIG. 9B may be referred to as CRC-aided successive cancellation list (CA-SCL) decoding operations having inverse permutation and decoding operations added thereto. The CA-SCL decoding operations generate a candidate list during the decoding process and select one of the candidates based on the CRC. Therefore, there are merits of improved error correction.

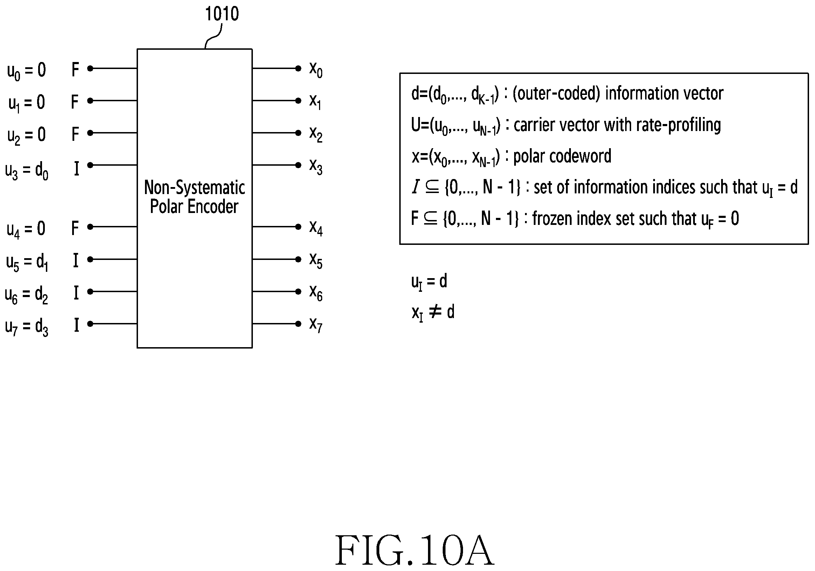

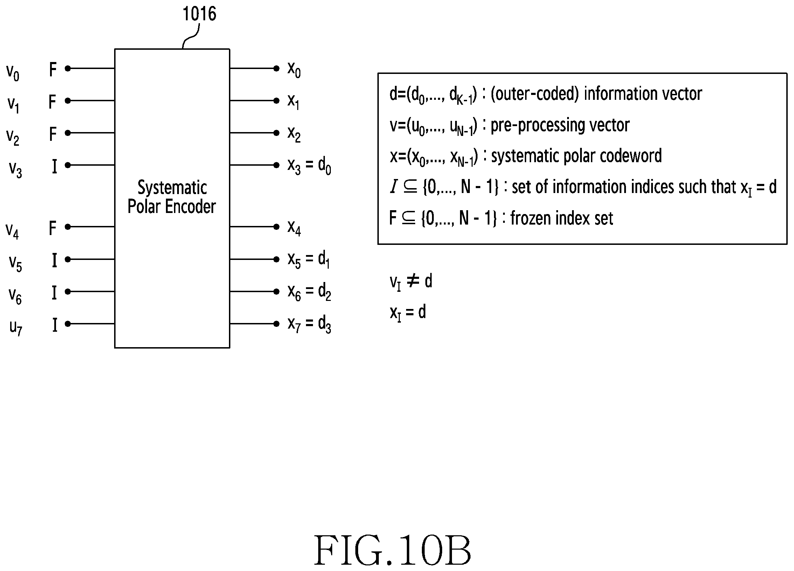

FIG. 10A and FIG. 10B are diagrams for describing non-systematic encoding and systematic encoding, respectively.

Referring to FIG. 10A, a non-systematic polar encoder 1010 is illustrated. In the case of non-systematic, a data carrier vector (*u*) and information bits (or an information vector (*d*) correspond to each other, but a codeword vector (*x*) generated by encoding the data carrier vector (*u*) does not correspond to the information bits. Therefore, if a codeword vector (*x*) is present, the receiving node cannot directly obtain information bits, but may acquire information bits by encoding codeword vector (*x*) to obtain the data carrier vector (*u*). That is, in the case of non-systematic, values corresponding to information bit indices of the data carrier vector (*u*) correspond to the information vector (*d*), but values corresponding to information bit indices of the codeword vector (*x*) do not correspond to the information vector (*d*).

In contrast, a systematic polar encoder 1016 is illustrated in FIG. 10B. In the case of systematic, if the preprocessed vector (*v*) obtained by preprocessing the data carrier vector (*u*) is encoded by the systematic polar encoder 1016, a systematic codeword vector (*x*) is generated, and this codeword vector (*x*) corresponds to information bits (or information vector *d*). That is, in the case of systematic, values corresponding to information bit indices of the data carrier vector (u) may not correspond to the information vector (*d*), but values corresponding to information bit indices of the codeword vector (*x*) may correspond to the information vector (*d*). In other words, information bits may be acquired by knowing the codeword vector (*x*).

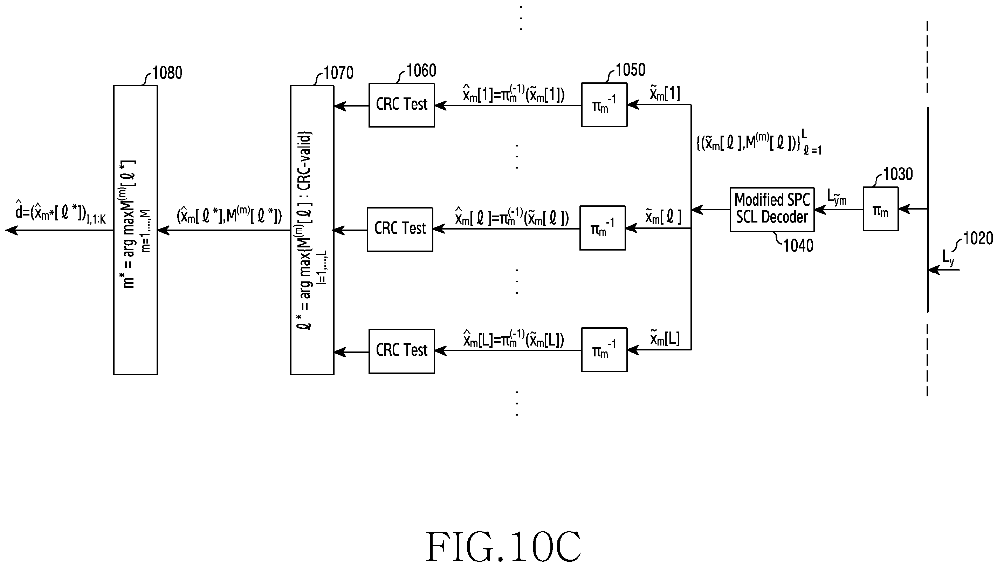

FIG. 10C is a diagram for describing a signal processing method to which systematic encoding is applied according to an embodiment.

The signal processing method of FIG. 10C is an embodiment in which signal processing is performed by applying the systematic encoding operation of FIG. 10B.

In operation 1020, the receiving node calculates an LLR value with regard to a received signal vector *y*. The receiving node may calculate an LLR value per each element of the signal vector *y* to generate an LLR vector *L_{y}*. Operation 1020 may correspond to operation 720 of FIG. 7.

In operation 1030, permutation is performed with regard to the LLR vector generated in the previous operation. A permutation operation may indicate conversion of the order of values included in a vector. In addition, the permutation operation may be performed based on multiple permutation schemes. For example, the receiving node may perform a first permutation operation to *M*^{th} permutation operation with regard to the LLR vector *L_{y}*. As a result, a first permutated LLR vector ( ${L}_{{{y}_{1}}^{˜}}$) to an *M*^{th} permutated LLR vector ( ${L}_{{{y}_{M}}^{˜}}$) may be generated. The multiple permutation schemes may have different permutation schemes. Operation 1030 may correspond to operation 730 of FIG. 7.

In operation 1040, the receiving node performs fourth decoding (e.g., successive cancellation list decoding for systematic polar codes) based on the permutated LLR vector, and outputs a score *M* generated based on the permutated codeword vector (*x̃*) and equations. Since the fourth decoding operation is SCL decoding, candidates corresponding to list values are selected.

In operation 1050, the receiving node performs inverse permutation with regard to the candidates selected in operation 1140, thereby generating inverse-permutated codeword vectors (*x̂*).

In operation 1060, the receiving node performs a valid test (e.g., CRC) with regard to as many inverse-permutated codeword vectors (*x̂*) as the list number.

In operation 1070, the receiving node selects one from the candidates that have passed the validity test. The selection may be performed based on scores. For example, the receiving node may select a candidate corresponding to the highest score. The selected candidate may include a score generated based on an inverse- permutated codeword vector (*x̃*) and equations.

Meanwhile, the receiving node may perform operations 1040 to 1070 with regard to a single permutated LLR vector. Therefore, if the receiving node performs operations 1040 to 1070 with regard to each of multiple LLR vectors permutated by *m* permutation methods, *m* codeword vectors and scores may be derived.

In operation 1080, the receiving node selects one of the *m* candidates selected in operation 1070. The selection by the receiving node may be performed based on the scores corresponding to respective candidates.

The above-described operations 1040 to 1070 may be referred to as CRC-aided successive cancellation list (CA-SCL) decoding operations to which an inverse permutation process for validity testing is added. The CA-SCL decoding operations generate a candidate list during the decoding process and select one of the candidates based on the CRC, thereby having improved error correction performance.

The signal processing method of FIG. 10C applies systematic encoding so that the receiving node acquires information bits directly from a codeword vector (*x*), without converting the codeword vector (*x*) to a data carrier vector (*u*). Therefore, decoding may be performed with less complexity as compared to an embodiment in which non-systematic encoding is applied.

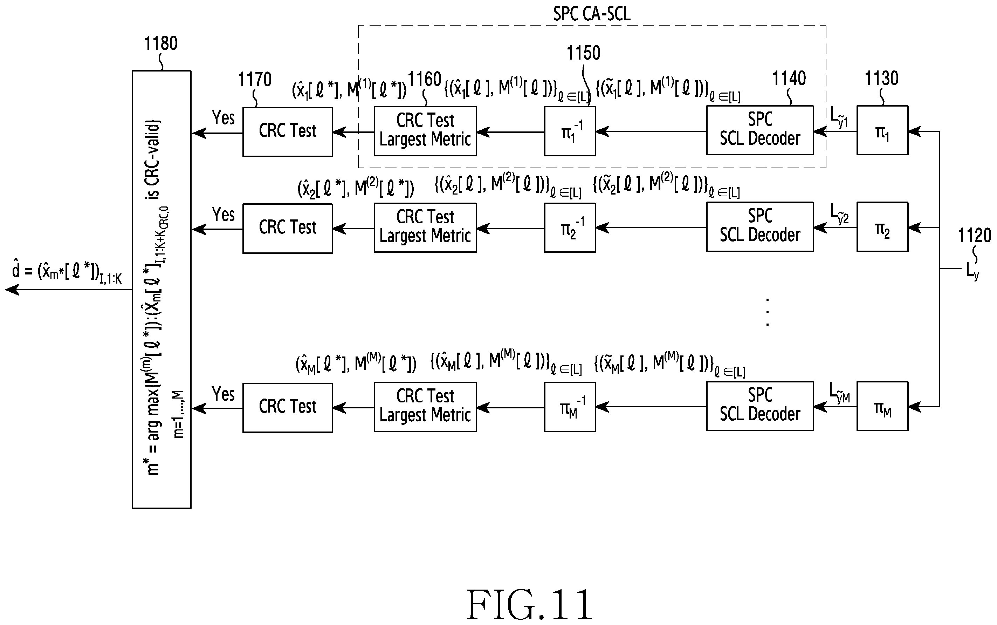

FIG. 11 is a diagram for describing a signal processing method to which systematic decoding is applied according to an embodiment.

The signal processing method of FIG. 11 is an embodiment in which signal processing is performed by applying a systematic decoding operation corresponding to the systematic encoding of FIG. 10B.

In operation 1120, the receiving node calculates an LLR value with regard to a received signal vector *y*. The receiving node may calculate an LLR value per each element of the signal vector *y* to generate an LLR vector *L_{y}*. Operation 1120 may correspond to operation 720 of FIG. 7.

In operation 1130, permutation is performed with regard to the LLR vector generated in the previous operation. A permutation operation may indicate conversion of the order of values included in a vector. In addition, the permutation operation may be performed based on multiple permutation schemes. For example, the receiving node may perform a first permutation operation to *M*^{th} permutation operation with regard to the LLR vector *L_{y}*. As a result, a first permutated LLR vector ( ${L}_{{{y}_{1}}^{˜}}$) to an *M*^{th} permutated LLR vector ( ${L}_{{{y}_{M}}^{˜}}$) may be generated. The multiple permutation schemes may have different permutation schemes. Operation 1130 may correspond to operation 730 of FIG. 7.

In operation 1140, the receiving node performs fourth decoding (e.g., systematic successive cancellation list decoding) based on the permutated LLR vector, and outputs a score *M* generated based on the permutated codeword vector (*x̃*) and equations. Since the fourth decoding operation is SCL decoding, candidates corresponding to list values are selected.

In operation 1150, the receiving node performs inverse permutation with regard to the candidates selected in operation 1140, thereby generating inverse-permutated codeword vectors (*x̂*).

In operation 1160, the receiving node performs a first validity test (e.g., CRC) with regard to as many inverse-permutated codeword vectors (*x̂*) as the list number, and selects one from the candidates that have passed the first validity test. The selection may be performed by the receiving node based on scores corresponding to respective candidates. For example, the receiving node may select the highest scoring candidate.

The above-described operation 1160 may correspond to operation 950 to operation 960 in FIG. 9A. The above-described operation 1140 may be understood to be systematic decoding applied in operation 940 of FIG. 9A.

The above-described operation 1140 to operation 1160 may be referred to as first systematic polar code (SPC) CA-SCL decoding.

The above operation 1140 and operation 1160 may be performed with regard to each of the multiple permutated LLR vectors according to multiple permutation methods. Therefore, through operation 1160, the receiving node may acquire multiple inverse-permutated codeword vectors (*x̂*) corresponding to the multiple permutated LLR vectors.

In operation 1170, the receiving node performs a second validity test (CRC or parity check) with regard to the inverse-permutated codeword vectors selected in operation 1160. In case that not all vectors pass the second validity test, the receiving node may report a NACK message.

In operation 1180, the receiving node selects one of the inverse-permutated codeword vectors (*x̂*) that have passed the second validity test of operation 1170 and acquires an information vector (*d*). The selection of the receiving node may be performed based on the score corresponding to the inverse-permutated codeword vector (*x̂*). For example, the receiving node may select the highest scoring vector to acquire information bits.

The signal processing method of FIG. 11 allows the receiving node to obtain information bits directly from the codeword vector (*x*), without converting the codeword vector (*x*) to the data carrier vector (*u*), by applying systematic decoding. At the same time, decoding error correction and detection can be performed by the first validity test performed in the decoding process and the second validity test performed after the decoding process, without increasing the complexity, and the decoding accuracy can be improved. In response to the receiving end performing a first validity test and a second validity test in accordance with an embodiment of the disclosure, the transmitting node may perform a first CRC encoding process and a second CRC encoding process in the encoding process. The transmitting node may apply additional bits for validity testing to the information bits in the encoding process. The first validity test may be performed by the receiving node to select the codeword vector of one of *L* candidates in the successive cancellation list decoding process.

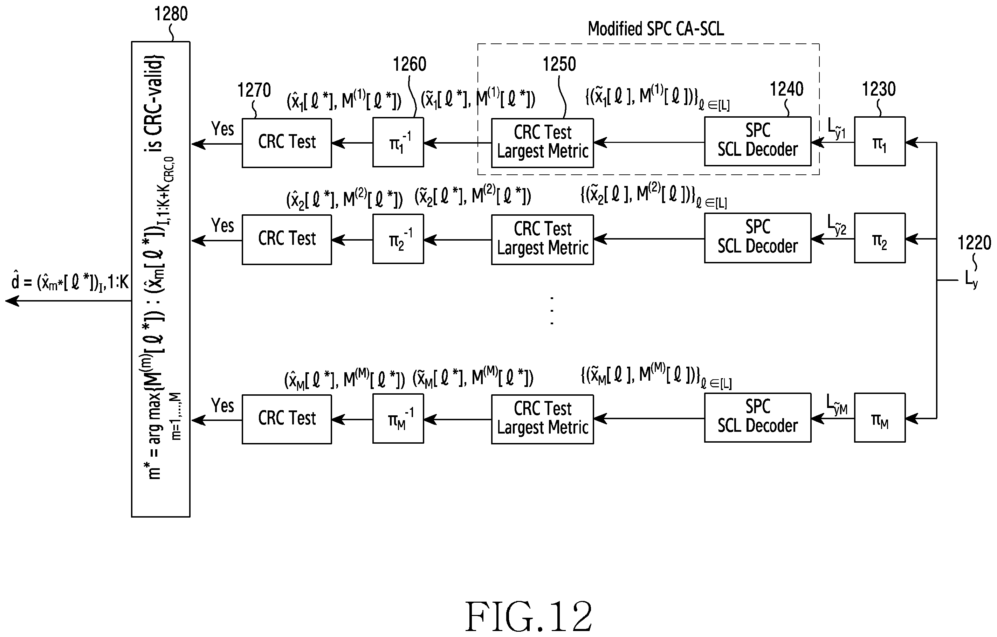

FIG. 12 is a diagram for describing a signal processing method to which systematic decoding is applied according to an embodiment.

The signal processing method of FIG. 12 may be understood as an embodiment in which the order of inverse permutation operations is changed in the signal processing method of FIG. 11.

In operation 1220, the receiving node calculates an LLR value with regard to a received signal vector *y*. The receiving node may calculate an LLR value per each element of the signal vector *y* to generate an LLR vector *L_{y}*. Operation 1220 may correspond to operation 720 of FIG. 7.

In operation 1230, permutation is performed with regard to the LLR vector generated in the previous operation. A permutation operation may indicate conversion of the order of values included in a vector. In addition, the permutation operation may be performed based on multiple permutation schemes. For example, the receiving node may perform a first permutation operation to *M*^{th} permutation operation with regard to the LLR vector *L_{y}*. As a result, a first permutated LLR vector ( ${L}_{{{y}_{1}}^{˜}}$) to an *M*^{th} permutated LLR vector ( ${L}_{{{y}_{M}}^{˜}}$) may be generated. The multiple permutation schemes may have different permutation schemes. Operation 1230 may correspond to operation 730 of FIG. 7.

In operation 1240, the receiving node performs fourth decoding (e.g., systematic successive cancellation list decoding) based on the permutated LLR vector, and outputs a score *M* generated based on the permutated codeword vector (*x̃*) and equations. Since the fourth decoding operation is SCL decoding, candidates corresponding to list values are selected. Each candidate may be configured by the permutated codeword vector (*x̃*) and a set of scores *M* generated based on equations.

In operation 1250, the receiving node performs a first validity test (e.g., CRC) with regard to as many permutated codeword vectors (*x̂*) as the number of candidates, and selects one from the candidates that have passed the first validity test. The selection may be performed by the receiving node based on scores corresponding to respective candidates. For example, the receiving node may select the highest scoring candidate.

The above-described operation 1250 may correspond to operation 950 to operation 960 in FIG. 9A. The above-described operation 1240 may be understood to be systematic decoding applied in operation 940 of FIG. 9A.

The above-described operation 1240 to operation 1250 may be referred to as second systematic polar code (SPC) CA-SCL decoding.

The above-described operation 1240 and operation 1250 may be performed with regard to each of the multiple permutated LLR vectors according to multiple permutation methods. Therefore, through operation 1250, the receiving node may acquire multiple permutated codeword vectors (*x̂*) corresponding to the multiple permutated LLR vectors.

In operation 1260, the receiving node performs inverse permutation with regard to candidates selected in operation 1250, thereby generating inverse-permutated codeword vectors (*x̂*).

In operation 1270, the receiving node performs a second validity test (CRC or parity check) with regard to the inverse-permutated codeword vectors (*x̂*). In case that not all vectors pass the second validity test, the receiving node may report a NACK message.

In operation 1280, the receiving node selects one of the inverse-permutated codeword vectors (*x̂*) that have passed the second validity test of operation 1270 and acquires an information vector (*d*). The selection of the receiving node may be performed based on the score corresponding to the inverse-permutated codeword vector (*x̂*). For example, the receiving node may select the highest scoring vector to acquire information bits.

In the signal processing method of FIG. 12, the receiving node may perform the first validity test without performing inverse permutation with regard to all candidates generated in the SCL decoding process. In contrast, in operation 1150 of FIG. 11, the receiving node performs inverse permutation with regard to *L* candidate vectors and selects one of the inverse-permutated candidate vectors, based on the first validity test, in operation 1160. However, in the case of FIG. 12, the receiving node may perform the first validity test with respect to non-inverse-permutated candidate vectors in operation 1250, and may select one of the non-inverse-permutated candidate vectors. Therefore, in operation 1260, the receiving node may perform inverse permutation with regard to the selected candidate vector only, thereby reducing the complexity of calculation.

In an embodiment, the receiving node may perform the first validity test without performing inverse permutation with regard to the permutated codeword vector, based on the information bit position of the permutated codeword vector (*x̃*). Such operation of the receiving node may be expressed by Equation 5 or Equation 6.${\left({π}_{m}^{- 1}\left({{x}^{˜}}_{m}\left[l\right]\right)\right)}_{J} {H}_{CRC}^{T} = {\left({{x}^{˜}}_{m}\left[l\right]\right)}_{{{J}^{˜}}_{m}} {H}_{CRC}^{T}$

The left side of Equation 5 may represent an operation in which the receiving node performs inverse permutation ( ${π}_{m}^{- 1}$) with regard to the permutated codeword vector, extracts a value corresponding to the first information bit index (*I*), and performs a validity test ( ${H}_{CRC}^{T}$). The right side of Equation 5 may represent an operation in which the receiving node extracts a value corresponding to the second information bit index (Ĩ) directly from the permutated codeword vector and performs a validity test. That is, the receiving node may acquire the second information bit index (Ĩ) corresponding to the permutation method in advance, and may perform a first validity test with respect to the codeword vector that has not undergone inverse permutation. The receiving node may pre-acquire information bit indices that indicate the information bit position of the permutated codeword vector. The receiving node may acquire information bit indices corresponding to multiple permutation schemes in advance.

Meanwhile, Equation 6, is as follows:${\left({π}_{m}^{- 1}\left({{x}^{˜}}_{m}\left[l\right]\right)\right)}_{J} {H}_{CRC}^{T} = {\left({{x}^{˜}}_{m}\left[l\right]\right)}_{J} {{H}^{˜}}_{CRC , m}^{T}$

The left side of Equation 6 may indicate an operation in which the receiving node performs inverse permutation ( ${π}_{m}^{- 1}$) with regard to the permutated codeword vector, extracts a value corresponding to the information bit index (*I*), and performs a validity test ( ${H}_{CRC}^{T}$). The right side of Equation 6 may represent an operation in which the receiving node extracts a value corresponding to information bit index (*I*) from the permutated codeword vector, and performs a validity test based on the validity test ( ${{H}^{˜}}_{CRC}^{T}$) method corresponding to the permutation method. That is, the receiving node may pre-acquire the validity verification method ( ${{H}^{˜}}_{CRC}^{T}$) corresponding to the permutation method, and may perform the first validity test with regard to the codeword vector that has not undergone inverse permutation. The receiving node may acquire multiple validation methods corresponding to multiple permutation methods in advance.

In the signal processing method of FIG. 12, systematic decoding is applied such that the receiving node may acquire information bits directly from the codeword vector (*x*), without converting the codeword vector (*x*) to the data carrier vector (*u*). At the same time, the first validity test performed during the decoding process while reducing the inverse permutation calculation and the second validity test performed after the decoding process enable decoding error correction and detection, thereby improving the decoding accuracy.

Regarding the signal processing methods described above with reference to FIG. 4 to FIG. 12, permutation operations according to an embodiment of the disclosure may have the following features.

### 1) Automorphism characteristics

The automorphism characteristics mean that, in case that permutation is applied to a first vector to generate a second vector, the second vector corresponds to one of all combinations possible in the first vector. For example, in case that an example vector of length 4 has frozen bit indices of 0 and 1 and information bit indices of 2 and 3, the example vector has four possible combinations of [0,0,0,0], [0,0,1,0], [0,0,0,1], and [0,0,1,1]. Therefore, if the example vector, when permutated, corresponds to one of the four combinations above, the permutation operation is valid, and such characteristics may be referred to as an automorphism.

That is, if the permutated vector is one of all vectors that can be derived from the original vector in consideration of the information bit index and the frozen bit index, the permutation operation has automorphism characteristics.

### 2) Characteristics represented by an affine transform

A permutated vector may be mathematically expressed by a linear combination of the original vector and the permutation matrix. For example, if vector A vector is permutated to generate vector B, it may be mathematically expressed as follows:
$B = P * A or B = P * A + C$
wherein *P* denotes a permutation matrix, and *C* denotes an arbitrary vector.

That is, the permutation operation may be mathematically expressed as a linear combination of the original vector and the permutation matrix.

### 3) Decoder-variant characteristics

The permutation operation according to an embodiment of the disclosure has characteristics such that the result of decoding a signal vector *y* and the result of permutating and decoding the signal vector *y* and then performing inverse permutation are different.

### 4) Multiple permutation methods with different characteristics

In a signal processing method according to an embodiment of the disclosure, the permutation operation may be performed based on multiple permutation methods. The multiple permutation methods have different characteristics. Therefore, the result of the receiving node performing first permutation with regard to the original vector, decoding the same, and then performing first inverse permutation is different from the result of the receiving node performing second permutation with regard to the original vector, decoding the same, and then performing second inverse permutation. The inverse permutation operation may be understood as an inverse process corresponding to the permutation operation.

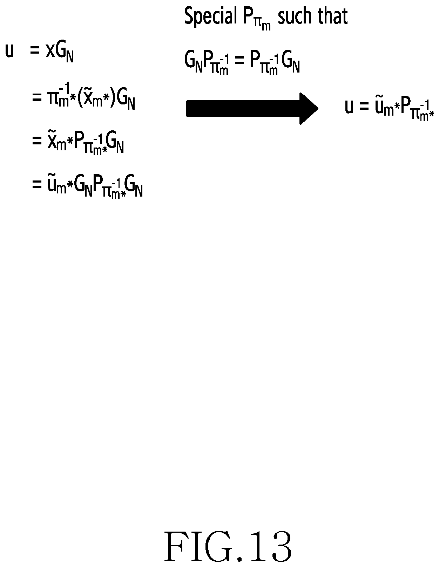

FIG. 13 is a diagram for describing the characteristics of a permutation matrix according to an embodiment.

FIG. 13 illustrates mathematical characteristics regarding a matrix applied to the permutation operation or inverse permutation operation of the signal processing method described with reference to FIG. 4 to FIG. 12.

In the formula shown in FIG. 13, *u* refers to a data carrier vector, *x* refers to a codeword vector, *G_{N}* refers to a polar code encoding matrix, ${P}_{{π}_{m}^{- 1}}$ refers to an inverse permutation matrix, *x̃* refers to a permutated codeword vector, and *ũ* refers to a permutated data carrier vector.

As in FIG. 13, in case that ${P}_{{π}_{m}^{- 1}} ∗ {G}_{N}$ and ${G}_{N} ∗ {P}_{{π}_{m}^{- 1}}$ are identical, that is, they are identical even if switched in order, the data carrier vector *u* may be easily obtained by multiplying the permutated data carrier vector *ũ* and the inverse permutation matrix ${P}_{{π}_{m}^{- 1}}$.

Based on such characteristics, the signal processing method described with reference to FIG. 5 to FIG. 12 may be improved. The same will be described below.

In operation 550 of FIG. 5, the receiving node may select the permutated data carrier vector *ũ* based on the score. In operation 560, the receiving node may multiply the selected permutation data carrier vector *ũ* by the inverse permutation matrix to perform an inverse permutation operation, and may acquire the data carrier vector *u*. Therefore, the receiving node may obtain information bits based on the acquired data carrier vector *u*. That is, the encoding process (operation 570) for obtaining the data carrier vector *u* may be omitted.

In operation 650 of FIG. 6, the receiving node may select a permutated data carrier vector *ũ* based on a score. In operation 660, the receiving node may perform the inverse permutation operation by multiplying the selected permutated data carrier vector *ũ* by the inverse permutation matrix, and may acquire the data carrier vector *u*. Therefore, the receiving node may perform a validity test regarding the acquired data carrier vector *u* (operation 680), and may obtain information bits. That is, the encoding process (operation 670) for obtaining the data carrier vector *u* in FIG. 6 may be omitted.

In operation 750 of FIG. 7, the receiving node may multiply the permutated data carrier vector *ũ* by an inverse permutation matrix to perform an inverse permutation operation and may acquire the data carrier vector *u*. Therefore, the validity test may be performed based on *u* acquired without the encoding operation (operation 760).

In operation 850 of FIG. 8, the receiving node may select a permutated data carrier vector *ũ* based on a score. In operation 860, the receiving node may perform the inverse permutation operation by multiplying the selected permutated data carrier vector *ũ* by the inverse permutation matrix, and may acquire the data carrier vector *u*. Therefore, the receiving node may acquire information bits, based on the acquired data carrier vector *u*. That is, the encoding process (operation 870) for obtaining the data carrier vector *u* may be omitted.

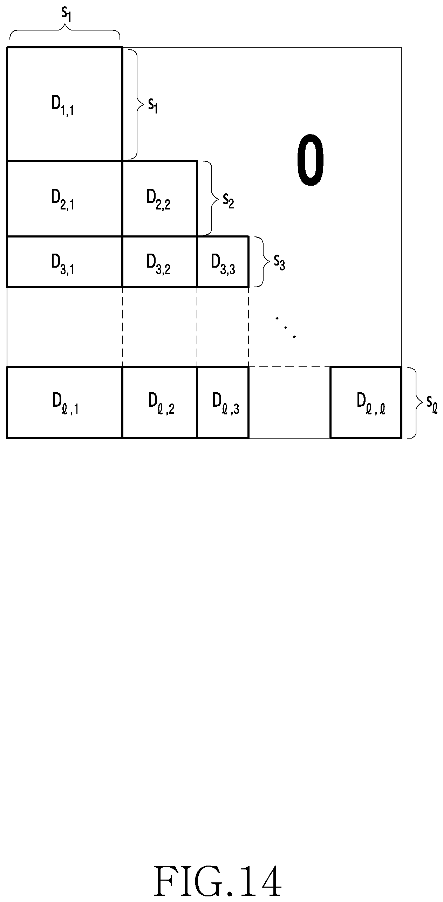

FIG. 14 is a diagram for describing features of a block-lower triangular (BLT) matrix according to an embodiment.

Referring to FIG. 14, a BLT matrix is illustrated.

A permutation operation (or an inverse permutation operation) according to an embodiment of the disclosure may be expressed as a product of a vector and a permutation matrix (or an inverse permutation matrix), and the permutation matrix may be a BLT matrix. The BLT matrix illustrated in FIG. 14 may have *n* x *n* size, and matrices *D*_{*i*,*i*} of *sᵢ* × *sᵢ* size may be arranged in the diagonal direction of the matrix. Each matrix *D*_{*i*,*i*} arranged in the diagonal is an invertible matrix of *sᵢ* × *sᵢ.* A BLT matrix may be defined by an array (or vector) *s =< s*₁*, s*₂*, s*₃*, ... , s_{ℓ}* > which indicates the size of each matrix *D*_{*i*,*i*}. The array (or vector) s may be referred to as a profile, and the values of the profile satisfy ${\sum }_{i = 1}^{l} {s}_{i} = n$. Matrix *D_{i,j}*(*j < i*) may be a binary fat matrix.

In addition, in the encoding operation according to an embodiment of the disclosure, the encoding matrix*G* may be a BLT matrix.

In an embodiment, in case that the encoding matrix *G* and the inverse permutation matrix *P*_{π}⁻¹ are BLT matrices, the result of *G* * *P*_{π}⁻¹ derives a result in which values within a specific index range in *G* are intermixed, based on profile (e.g., *s*₁*, s*₂*, s*₃) features of *P_{π}*⁻¹*.* For example, the result of *G* * *P_{π}*⁻¹ may be a matrix in which values corresponding to the first to fourth columns in *G* are intermixed, and values corresponding to the fifth to eighth columns in are intermixed. That is, based on profile features of the inverse permutation matrix, values within a specific index range in matrix *G* are intermixed, and such characteristics may be used to reduce the calculation complexity. For example, the receiving node may identify in advance values that do not affect the calculation result in a matrix, and may omit calculations regarding the identified values in subsequent calculations.

In an embodiment, when calculating *x̂* = *ũ* * *G * P_{π}*⁻¹, the receiving node may pre-generate and use a matrix *G̃* corresponding to *G* ∗ *P_{π}*^{*-*1} in order to reduce unnecessary calculations.

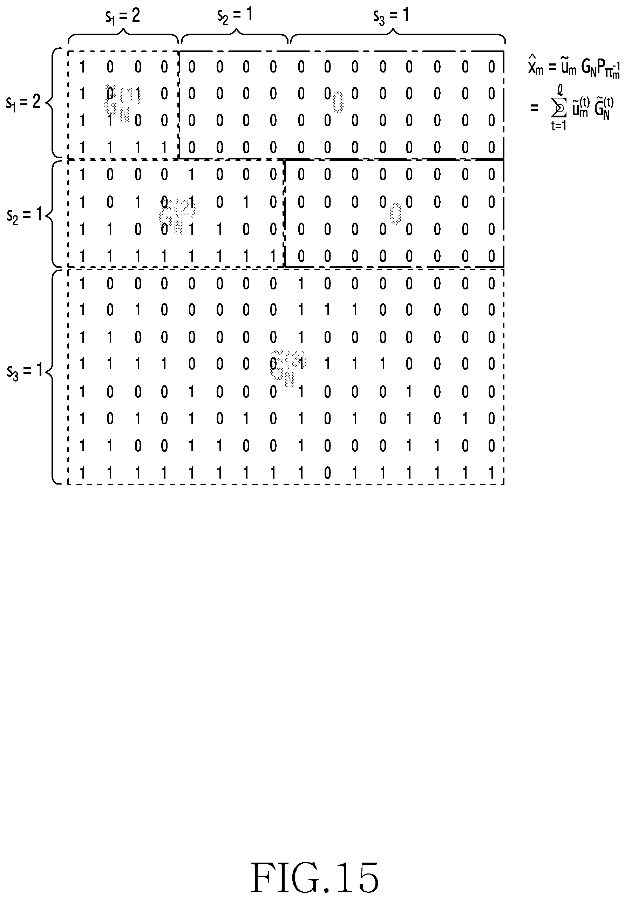

FIG. 15 is a diagram for describing features of an encoding matrix according to an embodiment.

Referring to FIG. 15, the matrix *G̃* described with reference to FIG. 14 is illustrated. The matrix *G̃* according to an embodiment may include matrices (e.g., *G̃*⁽¹⁾,*G̃*⁽²⁾ *and G̃*⁽³⁾) occupying a part of the matrix derived as a result of *G* ∗ *P_{π}*^{*-*1}. Each matrix *G̃* may have a size and a position determined based on the profile (e.g., *s*_{1,} *s*₂, *s*₃ etc.) of *P_{π}*^{*-*1}.

In an embodiment, the receiving node may generate an inverse permutated codeword vector *x̂* by multiplying the precalculated matrix *G̃* by the permutated data carrier vector *ũ*. In the signal processing method according to an embodiment of the disclosure, the receiving node may reduce unnecessary operations and lower the complexity of the signal processing method by repeatedly using the matrix *G̃* in each process of generating the codeword vector *x̂*.

Descriptions made with reference to FIG. 14 and FIG. 15 may be applied to the process of generating the inverse permutated codeword vector *x̂* in the embodiments described with reference to FIG. 4 to FIG. 12.

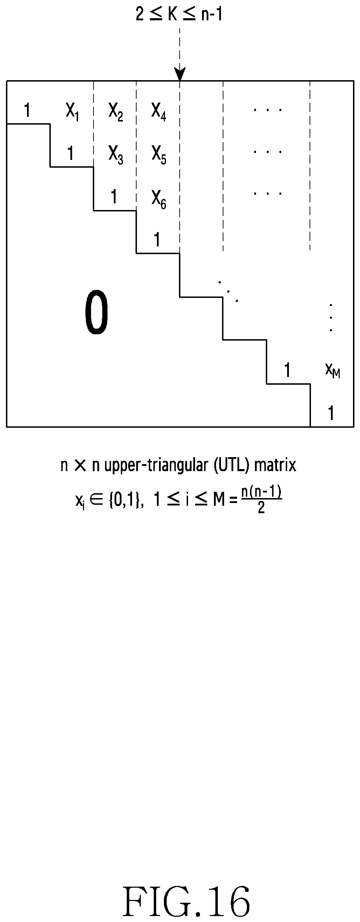

FIG. 16 is a diagram for describing features of an upper triangular matrix (hereinafter, a UTL matrix) according to an embodiment.

Referring to FIG. 16, a UTL matrix is illustrated.

The permutation operation (or inverse permutation operation) according to an embodiment of the disclosure may be expressed as a product of a vector and a permutation matrix (or inverse permutation matrix), and the permutation matrix may be a UTL matrix.

The UTL matrix illustrated in FIG. 16 may be of *n* x *n* size, and the value of 1 may be arranged in the diagonal direction of the matrix. In addition, as illustrated in FIG. 16, *xᵢ* (e.g., *x*₁, *x*₂, ... , *x_{M}*) which may include the value of 0 or 1 may be arranged in rows corresponding to indices lower than the values of 1 arranged in the diagonal direction. In the UTL matrix, values of 0 are located in rows corresponding to indices larger than the values of 1 arranged in the diagonal direction. For example, in FIG. 16, the value of 1 arranged in the diagonal direction in the third column of the UTL matrix is located in the third row. Therefore, *x*₂ and *x*₃ may be positioned in the first and second rows of the third column of the UTL matrix, and 0 may be positioned from the fourth row.

In case that a permutation matrix according to an embodiment of the disclosure is a UTL matrix, and all values of *x* located from the first column to the *K*^{th} column of the permutation matrix are 0, values corresponding to as many indices as 2*^{k}* starting from the start of the vector multiplied by the permutation matrix are not affected. Therefore, when the receiving node performs a permutation operation with regard to a specific vector, if the permutation matrix is a UTL matrix, the receiving node may not calculate values corresponding to as many indices as 2*^{k}* starting from the start of the corresponding vector, and may calculate only the remaining values to generate a permutated vector. That is, the receiving node may reduce the complexity of calculations in the signal processing process.

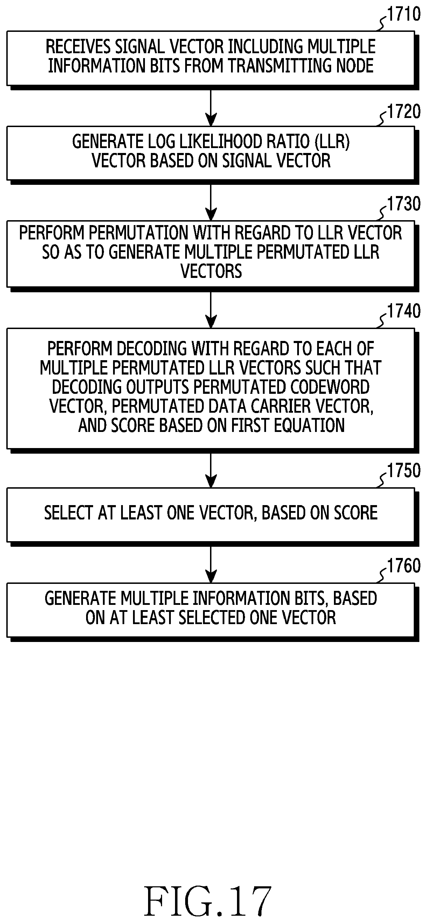

FIG. 17 is a diagram for describing a signal processing method according to an embodiment.

A signal processing method according to an embodiment of the disclosure may include the following operations.

Referring to FIG. 17, in operation 1710, the receiving node receives a signal vector (*y*) including multiple information bits from the transmitting node. Operation 1710 may correspond to operation 410 in FIG. 4 and operation 510 in FIG. 5.

In operation 1720, the receiving node generates a log likelihood ratio (LLR) vector (*L_{y}*) based on the signal vector *y*. Operation 1720 may correspond to operation 520 of FIG. 5, operation 620 of FIG. 6, operation 720 of FIG. 7, operation 820 of FIG. 8, operation 920 of FIG. 9A, operation 1120 of FIG. 11, and/or operation 1220 of FIG. 12.

In operation 1730, the receiving node performs permutation with regard to the LLR vector so as to generate multiple permutated LLR vectors (*L_{ỹ}*). Operation 1730 may correspond to operation 530 of FIG. 5, operation 630 of FIG. 6, operation 730 of FIG. 7, operation 830 of FIG. 8, operation 930 of FIG. 9A, operation 1130 of FIG. 11, and/or operation 1230 of FIG. 12.

In operation 1740, the receiving node performs decoding with regard to each of the multiple permutated LLR vectors, and the decoding outputs a score (*M*) based on a permutated codeword vector (*x̃*), a permutated data carrier vector (*ũ*), and Equation 1. Operation 1740 may correspond to operation 540 of FIG. 5, operation 640 of FIG. 6, operation 740 of FIG. 7, operation 840 of FIG. 8, and/or operations 940 to 960 of FIG. 9A.

In operation 1750, the receiving node selects at least one vector, based on the score calculated by the first equation. The first equation may be based on [Equation 2] to [Equation 5] described with reference to FIG. 5. Operation 1750 may correspond to operation 550 of FIG. 5, operation 650 of FIG. 6, operation 780 of FIG. 7, operation 850 of FIG. 8, operation 970 of FIG. 9A, operation 1180 of FIG. 11, and/or operation 1280 of FIG. 12. The selected vector may be a codeword vector or a data carrier vector corresponding to the score calculated by Equation 1.

In operation 1760, the receiving node generates (or acquires) multiple information bits, based on the at least one vector selected in operation 1750. Operation 1760 may correspond to operation 560 to 570 of FIG. 5, operation 660 to 680 of FIG. 6, operation 780 of FIG. 7, operation 860 to 870 of FIG. 8, operation 1180 of FIG. 11, and/or operation 1280 of FIG. 12.

The operations of the signal processing method according to an embodiment of the disclosure described with reference to FIG. 17 may be operations performed by the transceiver and the processor of the receiving node.

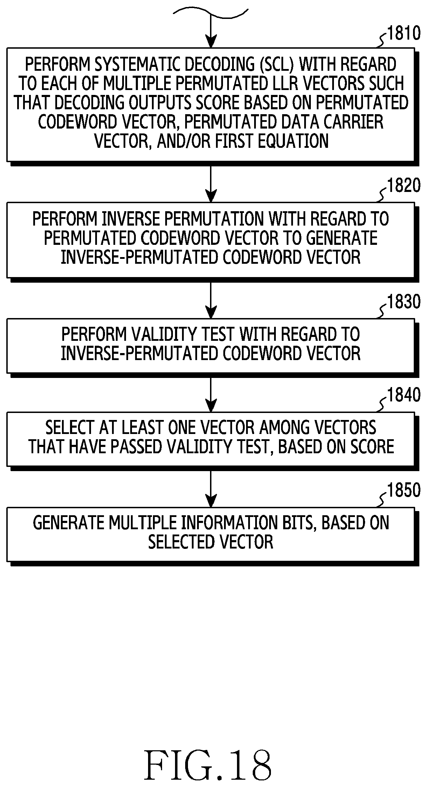

FIG. 18 is a diagram for describing a signal processing method according to an embodiment.

A signal processing method according to an embodiment of the disclosure may include the following operations. The operations described with reference to FIG. 18 may be understood as operations following the operation 1730 of FIG. 17. That is, operation 1810 of FIG. 18 may be understood as an operation performed after operation 1710 and 1720 of FIG. 17.

Referring to FIG. 18, in operation 1810 the receiving node may perform systematic decoding (SCL) with regard to each of the multiple permutated LLR vectors such that the decoding outputs a score based on a permutated codeword vector and the first equation. Operation 1810 may correspond to operation 1240 to 1250 of FIG. 12.

In operation 1820, the receiving node may perform inverse permutation with regard to the permutated codeword vector to generate an inverse-permutated codeword vector. Operation 1820 may correspond to operation 1260 of FIG. 12.

In operation 1830, the receiving node performs a validity test with regard to the inverse-permutated codeword vector. Operation 1830 may correspond to operation 1270 of FIG. 12.

In operation 1840, the receiving node selects at least one vector among vectors that have passed the validity test, based on the score calculated by the first equation. Operation 1840 may correspond to operation 180 of FIG. 7, operation 1180 of FIG. 11, and/or operation 1280 of FIG. 12.

In operation 1850, the receiving node generates multiple information bits, based on the vector selected in operation 1840. Operation 1850 may correspond to operation 1760 of FIG. 17.

The operations of the signal processing method according to an embodiment of the disclosure described with reference to FIG. 18 may be operations performed by the transceiver and the processor of the receiving node.

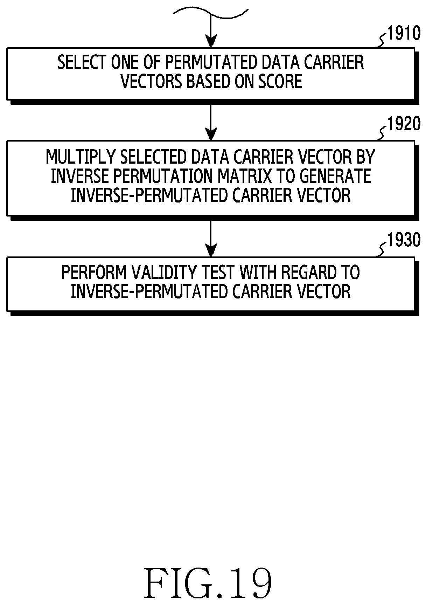

FIG. 19 is a diagram for describing a signal processing method according to an embodiment.

A signal processing method according to an embodiment of the disclosure may include the following operations.

The operations described with reference to FIG. 19 may be understood as specific descriptions of operation 1760 of FIG. 17 or operation 1850 of FIG. 18.

In operation 1910, the receiving node selects one of the permutated data carrier vectors based on the score calculated by the previous operations. Operation 1910 may correspond to operation 550 of FIG. 5, operation 650 of FIG. 6, operation 850 of FIG. 8, and/or operation 970 of FIG. 9A.

In operation 1920, the receiving node multiplies the selected data carrier vector by an inverse permutation matrix to generate an inverse-permutated carrier vector. Operation 1920 may be performed based on the characteristics of the inverse permutation matrix described with reference to FIG. 13. In case that the product (P*G) of the inverse permutation matrix (P) and the encoding matrix (G) is identical to the product (G*P) thereof in inverse order, the receiving node may multiply the selected data carrier vector by the inverse permutation matrix to acquire the inverse-permutated data carrier vector. Therefore, the receiving node may omit the process of encoding a codeword vector.

In operation 1930, the receiving node performs a validity test with regard to the inverse-permutated data carrier vector. The receiving node may acquire information bits by using the data carrier vector that has passed the validity test.

The operations of the signal processing method according to an embodiment of the disclosure described with reference to FIG. 19 may be operations performed by the transceiver and processor of receiving node.

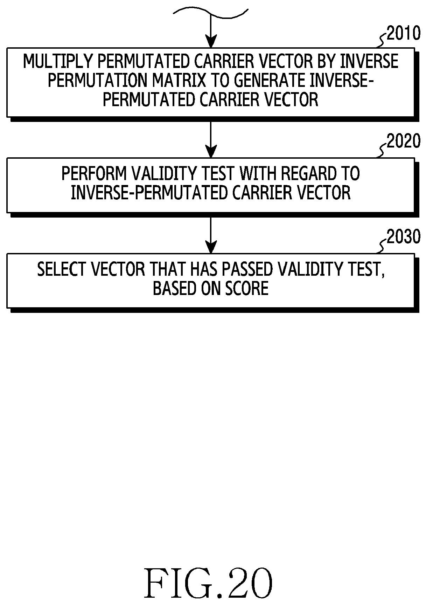

FIG. 20 is a diagram for describing a signal processing method according to an embodiment.

A signal processing method according to an embodiment of the disclosure may include the following operations.

The operations described with reference to FIG. 20 may be understood as a specific description of operation 1740 to operation 1750 in FIG. 17.

In operation 2010, the receiving node multiplies the permutated carrier vector by the inverse permutation matrix to generate the inverse-permutated carrier vector. Operation 2010 may be performed based on the characteristics of the inverse permutation matrix described with reference to FIG. 13. In case that the product (P*G) of the inverse permutation matrix (P) and the encoding matrix (G) is identical to the product (G*P) thereof in inverse order, the receiving node may multiply the permutated data carrier vector by the inverse permutation matrix to acquire the inverse-permutated data carrier vector. Therefore, the receiving node may omit the process of encoding a codeword vector.

In operation 2020, the receiving node performs a validity test with regard to the inverse-permutated carrier vector. Operation 2020 may correspond to operation 770 of FIG. 7.

In operation 2030, the receiving node selects one of the vectors that have passed the validity test, based on a score calculated by the first equation. Operation 2030 may correspond to operation 780 of FIG. 7.

The operations of the signal processing method according to an embodiment of the disclosure described with reference to FIG. 20 may be operations performed by the transceiver and the processor of the receiving node.

According to the signal processing method described above with reference to FIG. 4 to FIG. 20, the complexity of the signal processing process in the receiving node may be reduced to reduce delay, and the accuracy of signal processing may be improved by the error detection and correction function. Although each embodiment has been described separately in the disclosure, the operations of each embodiment may be combined with each other to constitute a new embodiment.

Although the specification and attached drawings have disclosed the embodiments of the disclosure, and have used specific terms, these are to describe the technical contents of the disclosure easily and help the understanding of the disclosure but are not intended to limit the scope of the disclosure thereto. It will be apparent to those skilled in the art that other variants based on the technical idea of the disclosure may be implemented, in addition to the embodiments set forth herein.

Methods disclosed in the claims or methods according to the embodiments described in the specification of the disclosure may be implemented by hardware, software, or a combination of hardware and software.

When implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memory including random access memory and flash memory, a read only memory (ROM), electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form memory in which the program is stored. In addition, a plurality of such memories may be included in the electronic device.

In addition, the programs may be stored in an attachable storage device which is accessible to the electronic device through communication networks such as the Internet, Intranet, local area network (LAN), wide LAN (WLAN), and storage area network (SAN) or a combination thereof. Such a storage device may access the electronic device via an external port. Also, a separate storage device on the communication network may access a device for performing embodiments of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural, and therefore, either an element expressed in the plural may also include a single element or an element expressed in the singular may also include multiple elements

In the disclosure, the term "unit" or "module" may refer to a hardware component such as a processor or circuit, and/or a software component executed by a hardware component such as a processor.

The "unit" or "module" may be stored in an addressable storage medium and may be implemented by a program executable by a processor. For example, the "unit" or "module" may be implemented by elements such as software elements, object-oriented software elements, class elements, and task elements, processes, functions, attributes, procedures, sub-routines, segments of program codes, drivers, firmware, micro-codes, circuits, data, databases, data structures, tables, arrays, and parameters.

Particular implementations described herein are merely an embodiment, and do not limit the scope of the disclosure in any way. For the brevity and conciseness of the specification, a description of conventional electronic components, control systems, software, and other functional aspects of these systems may be omitted.

Also, as used herein, the expression "including at least one of a, b, or c" may mean "including only a", "including only b", "including only c", "including a and b", "including b and c", "including a and c", or "including a, b, and c all".

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a receiving node in a wireless communication system, the method comprising:
receiving a signal vector including multiple information bits from a transmitting node;
generating a log likelihood ratio (LLR) vector, based on the signal vector;
performing permutation with regard to the LLR vector to generate multiple permutated LLR vectors;
performing decoding with respect to each of the multiple permutated LLR vectors such that the decoding generates a score based on a first equation and at least one of a permutated codeword vector (*x̃*) and a permutated data carrier vector (*ũ*);
selecting at least one vector, based on the score; and
acquiring the multiple information bits, based on the selected at least one vector.

2. The method of claim 1, wherein the multiple permutated LLR vectors are expressed by a linear combination of the LLR vector and a permutation matrix corresponding to one of the multiple permutation methods.

3. The method of claim 1, wherein the first equation is based on values obtained by multiplying a vector resulting from modulating permutated codeword vector (*x̃*) by the permutated LLR vector between identical indices.

4. The method of claim 1, wherein the decoding generates a decision LLR vector, based on the permutated LLR vector, and
wherein the first equation is based on a value corresponding to an information bit index or a frozen bit index of the decision LLR vector.

5. The method of claim 1, wherein the decoding includes successive cancellation-list (SCL) decoding, and
wherein the successive cancellation-list decoding performs a first validity test with regard to candidate vectors corresponding to a preconfigured list value.

6. The method of claim 5, wherein the decoding is systematic decoding,
wherein the method further comprises:
performing inverse permutation with regard to the permutated codeword vector (*x̃*) to generate an inverse-permutated codeword vector (*x̂*); and
performing a second validity test with respect to the inverse-permutated codeword vector, and
wherein, in the selecting of at least one vector, one of vectors which have passed the second validity test is selected.

7. The method of claim 2, wherein an inverse permutation matrix (*P_{π}*^{*-*1}) corresponding to the permutation matrix (*P_{π}*) satisfies an equation below with regard to an encoding matrix (G). ${P}_{{π}^{- 1}} ∗ G = G ∗ {P}_{{π}^{- 1}}$

8. The method of claim 7, wherein, in the selecting of at least one vector, one of permutated data carrier vectors (*ũ*) is selected, and
wherein, in generating of the multiple information bits, an inverse-permutated carrier vector (*û*) is generated by multiplying the selected data carrier vector (*ũ*) by the inverse-permutated matrix (*P_{π}*^{*-*1}).

9. The method of claim 7, further comprising:
generating an inverse-permutated carrier vector (*û*) by multiplying the inverse permutation matrix (*P_{π}*^{*-*1}) by a permutation data carrier vector (*ũ*); and
performing a validity test with regard to the inverse-permutated carrier vector (*û*),
wherein, in the selecting of at least one vector, a vector that has passed the validity test is selected.

10. A receiving node in a wireless communication system, the receiving node comprising:
a transceiver; and
a controller coupled to the transceiver,
wherein the controller is configured to perform:
receiving a signal vector including multiple information bits from a transmitting node;
generating a log likelihood ratio (LLR) vector, based on the signal vector;
performing permutation with regard to the LLR vector to generate multiple permutated LLR vectors;
performing decoding with respect to each of the multiple permutated LLR vectors such that the decoding generates a score based on a permutated codeword vector (*x̃*), a permutated data carrier vector (*ũ*), and a first equation;
selecting at least one vector, based on the score; and
acquiring the multiple information bits, based on the selected at least one vector.

11. The receiving node of claim 10, wherein the multiple permutated LLR vectors are expressed by a linear combination of the LLR vector and a permutation matrix corresponding to one of the multiple permutation methods.

12. The receiving node of claim 10, wherein the first equation is based on values obtained by multiplying a vector resulting from modulating permutated codeword vector (*x̃*) by the permutated LLR vector between identical indices.

13. The receiving node of claim 10, wherein the decoding generates a decision LLR vector, based on the permutated LLR vector, and
wherein the first equation is based on a value corresponding to an information bit index or a frozen bit index of the decision LLR vector.

14. The receiving node of claim 10, wherein the decoding includes successive cancellation-list (SCL) decoding, and
wherein the successive cancellation-list decoding performs a first validity test with regard to candidate vectors corresponding to a preconfigured list value.

15. The receiving node of claim 14, wherein the decoding is systematic decoding,
wherein the controller is configured to further perform:
performing inverse permutation with regard to the permutated codeword vector (*x̃*) to generate an inverse-permutated codeword vector (*x̂*); and
performing a second validity test with respect to the inverse-permutated codeword vector, and
wherein, in the selecting of at least one vector, one of vectors which have passed the second validity test is selected.
